# EUROPEAN PATENT SPECIFICATION

(11) **EP 3 920 594 B1**
(45) Date of publication and mention of the grant of the patent: **31.07.2024**
(21) Application number: 20766426.9
(22) Date of filing: 05.03.2020
(51) Int. Cl.: H04W 36/12, H04W 36/32, H04L 45/50, H04W 40/20, H04W 64/00, H04L 12/46, H04W 4/02, H04W 4/021, H04W 40/24, H04W 76/11, H04W 76/12, H04W 40/02, H04W 84/04

(54) **METHOD AND DEVICE FOR DETERMINING COMMUNITY SITE GATEWAY CSG**
VERFAHREN UND VORRICHTUNG ZUR BESTIMMUNG DES GEMEINSCHAFTSSTANDORT-GATEWAY-CSG
PROCÉDÉ ET DISPOSITIF PERMETTANT DE DÉTERMINER UNE PASSERELLE DE SITE COMMUNAUTAIRE, CSG

(30) Priority: 06.03.2019 CN 201910169015
(43) Date of publication of application: 08.12.2021
(73) Proprietor: Huawei Technologies Co., Ltd., Shenzhen, Guangdong 518129 (CN)
(72) Inventor: JIANG, Yuanlong, Shenzhen, Guangdong 518129 (CN); WANG, Yali, Shenzhen, Guangdong 518129 (CN)
(74) Representative: Maiwald GmbH
(86) International application number: PCT/CN2020/078063
(87) International publication number: WO 2020/177745

(56) References cited:
- EP-A1- 3 445 086
- WO-A2-2011/098249
- CN-A- 102 308 598
- CN-A- 102 347 883
- CN-A- 102 387 584
- CN-A- 105 334 527
- CN-A- 106 792 518
- CN-A- 108 886 718
- "Technical Specifications for MPLS in Mobile Backhaul Networks", 6 June 2014 (2014-06-06), XP050785176, Retrieved from the Internet <URL:http://www.3gpp.org/ftp/Meetings_3GPP_SYNC/RAN/LSin/> [retrieved on 20140606]
- ANONYMOUS: "Straw Ballot; WT-221a1, TR-221 Amendment 1 (Revision 07)", BROADBAND FORUM STRAW BALLOT, 30 June 2013 (2013-06-30), pages 1 - 26, XP009523017

## Description

### TECHNICAL FIELD

This application relates to the communication field, and in particular, to a CSG determining method and apparatus.

### BACKGROUND

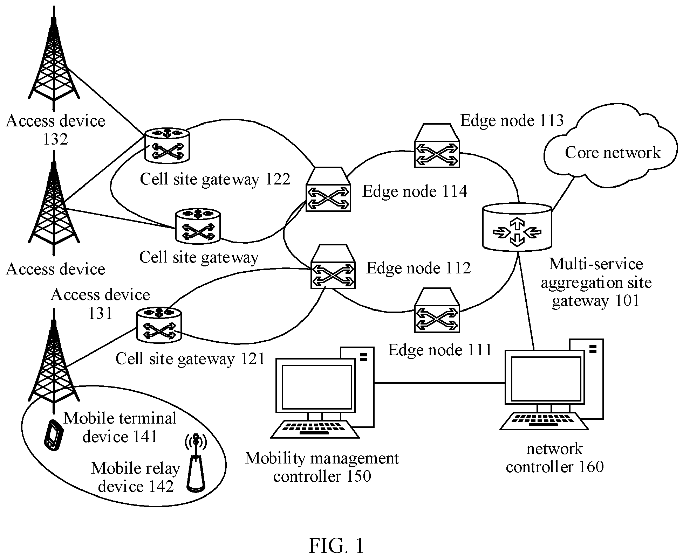

Currently, a service requested by a mobile device may be sent by a multi-service aggregation site gateway (multi-service aggregation site gateway, MASG) to a cell site gateway (cell site gateway, CSG) in a fixed bearer network. The mobile device may communicate with the CSG through a radio access device, for example, an evolved NodeB (Evolutional Node B, eNB) or a next generation NodeB (Next generation NodeB, gNB), to obtain downlink data corresponding to the requested service. In a communication scenario shown in FIG. 1, an MASG 101 sends downlink data corresponding to a service requested by a mobile device to a CSG 121 through an edge node 111 and an edge node 112. The mobile device may include at least one of a mobile terminal device 141 and a mobile relay device 142 in FIG. 1. The mobile device may receive the downlink data from the CSG 121 through an access device 131. When the mobile device moves from an area covered by the access device 131 to an area covered by an access device 132, the mobile device cannot obtain, through the access device 131, the downlink data that is sent by the MASG 101 to the access device 131 through the CSG 121. Consequently, the service requested by the mobile device is interrupted. The foregoing downlink transmission solution not only increases a service transmission latency, but also reduces communication reliability and affects user experience.
EP 3 445 086 A1 describes obtaining, by a target base station, an identifier of a source control plane and a context identifier of the UE from a source base station; and sending, by the target base station, the identifier of the source control plane and the context identifier of the UE to a target control plane device, where the identifier of the source control plane and the context identifier of the UE are used to obtain a context of the UE. An

X2-interface-based handover across control planes is implemented, and implementation of a core network is simplified. CN 102 347 883 A describes that a routing list is inquired according to the address information of opposite end equipment when the pseudo wire building is requested; a first pseudo wire is built when that a three-layer router between current end equipment and the opposite end equipment is in one jump is obtained through inquiring the router list; and the service between the current end equipment and the opposite end equipment is transmitted through the first pseudo wire.

"Technical Specifications for MPLS in Mobile Backhaul Networks", (20140606), 3GPP DRAFT; TR-221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN/LSin/, provides specifications for MPLS.

### SUMMARY

This application provides a CSG determining method and apparatus, to reduce a service transmission latency and improve communication reliability. The invention is set out in the appended set of claims.

According to a first aspect, a CSG determining method is provided, including: A first device obtains, before a first moment, a location range in which a mobile device is located at the first moment; and the first device obtains an identifier of at least one target CSG based on the location range before the first moment, where the at least one target CSG can provide downlink data transmission for the mobile device at the first moment.

In the foregoing method, the location range in which the mobile device is located at the first moment is estimated at a time point earlier than the first moment, and the target CSG that can provide the downlink data transmission for the mobile device at the first moment is determined. An MASG establishes a tunnel with the target CSG before the first moment, so that the MASG can send downlink data requested by the mobile device to the target CSG through the established tunnel before the first moment. The target CSG may send the downlink data to the mobile device at the first moment through a corresponding access device. The mobile device moves to the location range at the first moment, and can reliably receive the downlink data. The foregoing method can ensure continuity of service transmission, reduce a service transmission latency, and improve communication reliability.

Optionally, the mobile device includes at least one of a mobile terminal device and a mobile relay device.

Optionally, that a first device obtains, before a first moment, a location range in which a mobile device is located at the first moment includes: The first device determines a first location and a second moment of the mobile device, where the first location is a location at which the mobile device is located at the second moment, and the second moment is earlier than the first moment; and the first device obtains the location range through calculation based on the first location, the second moment, a preset speed, and preset duration, where the preset speed is a moving speed of the mobile device within the preset duration, and the preset duration is duration between the second moment and the first moment. This implementation can be applied to a scenario in which the mobile device moves at a specified moving speed, for example, a scenario in which the mobile device is located in a vehicle (for example, a train) that moves at a specified and uniform speed. Therefore, signaling overheads for indicating the moving speed can be reduced.

That "the first device determines a first location and a second moment of the mobile device" may be understood as that the first device receives information that is used to indicate the first location and the second moment, and the information is from the first device. For example, the information may be directly sent (for example, through transparent transmission by the access device) by the mobile device to the first device. Alternatively, the information may be forwarded by the mobile device to the first device through another device. Descriptions of same or similar cases are omitted below.

Optionally, that a first device obtains, before a first moment, a location range in which a mobile device is located at the first moment includes: The first device determines a first location, a second moment, and a speed of the mobile device, where the first location is a location at which the mobile device is located at the second moment, the speed is a moving speed of the mobile device, and the second moment is earlier than the first moment; and the first device obtains the location range through calculation based on the first location, the second moment, the speed, and preset duration, where the preset duration is duration between the second moment and the first moment. This implementation can be applied to a scenario in which the mobile device moves at a uniform moving speed within the location range with a plurality of different speeds. Therefore, a location of the mobile device can be more accurately predicted.

Optionally, that a first device obtains, before a first moment, a location range in which a mobile device is located at the first moment includes: The first device determines a first location, a second moment, a first speed, a first acceleration, a second location, a third moment, a second speed, and a second acceleration of the mobile device, where the first location is a location at which the mobile device is located at the second moment, the first speed is a moving speed of the mobile device at the second moment, the first acceleration is a moving acceleration of the mobile device at the second moment, the second location is a location at which the mobile device is located at the third moment, the second speed is a moving speed of the mobile device at the third moment, the second acceleration is a moving acceleration of the mobile device at the third moment, and both the second moment and the third moment are earlier than the first moment; and the first device uses a prediction algorithm to obtain, through calculation, the location range based on the first location, the second moment, the first speed, the first acceleration, the second location, the third moment, the second speed, the second acceleration, and the preset duration, where the preset duration is duration between the second moment and the first moment or duration between the third moment and the first moment. The prediction algorithm includes a Kalman filtering algorithm, a random forest algorithm, a neural network algorithm, or the like. This implementation can be applied to a scenario in which the mobile device moves at a variable speed. A location of the mobile device can be more accurately predicted by performing prediction based on moving information of the mobile device at a plurality of moments.

Optionally, that "the at least one target CSG can provide downlink data transmission for the mobile device at the first moment" may be understood as that the location range in which the mobile device is located at the first moment is in a coverage range of the access device corresponding to the at least one target CSG.

Optionally, the first device is a multi-service aggregation site gateway MASG, and that the first device obtains an identifier of at least one target CSG based on the location range before the first moment includes: The first device obtains a mapping relationship from a controller; the first device determines, based on the location range, an identifier of a radio access device covering the location range; and the first device obtains the identifier of the at least one target CSG according to the mapping relationship and the identifier of the radio access device. The mapping relationship includes the identifier of the at least one target CSG and the identifier of the radio access device that communicates with the at least one target CSG.

The first device is the MASG, and after the first device obtains the identifier of the at least one target CSG based on the location range before the first moment, the method further includes: The first device establishes, before the first moment, a tunnel based on the identifier of the at least one target CSG and the at least one target CSG; and the first device sends downlink data of the mobile device to the at least one target CSG through the tunnel at the first moment.

Optionally, the first device is the MASG, and that the first device establishes, before the first moment, a tunnel based on the identifier of the at least one target CSG and the at least one target CSG includes: The first device sends a correspondence used for tunnel forwarding to the at least one target CSG. The correspondence used for tunnel forwarding includes the identifier of the at least one target CSG and tunnel information, and the tunnel information is used for tunnel encapsulation.

Optionally, the first device is a controller, and that the first device obtains an identifier of at least one CSG based on the location range before the first moment includes: The first device determines, based on the location range, an identifier of a radio access device covering the location range; and the first device obtains the identifier of the at least one target CSG according to a mapping relationship and the identifier of the radio access device. The mapping relationship includes the identifier of the at least one target CSG and the identifier of the radio access device that communicates with the at least one target CSG.

Optionally, the controller is a mobility management controller, and the method further includes: The first device sends the identifier of the at least one target CSG to a network controller.

Optionally, the controller is a network controller, and the method further includes: The first device obtains the mapping relationship from a mobility management controller.

Optionally, the method further includes: The first device sends the identifier of the at least one target CSG to an MASG before the first moment.

Optionally, the method further includes: The first device sends a correspondence used for tunnel forwarding to the at least one target CSG. The correspondence used for tunnel forwarding includes the identifier of the at least one target CSG and tunnel information, and the tunnel information is used for tunnel encapsulation.

Optionally, the first device is a mobility management controller, and that the first device obtains an identifier of at least one CSG based on the location range before the first moment includes: The first device determines, based on the location range, an identifier of a radio access device covering the location range; and the first device obtains the identifier of the at least one target CSG according to a mapping relationship and the identifier of the radio access device. The mapping relationship includes the identifier of the at least one target CSG and the identifier of the radio access device that communicates with the at least one target CSG.

Optionally, the first device is a network controller or an MASG, and that the first device obtains an identifier of at least one CSG based on the location range before the first moment includes: The first device obtains a mapping relationship from a mobility management controller; the first device determines, based on the location range, an identifier of a radio access device covering the location range; and the first device obtains the identifier of the at least one target CSG according to the mapping relationship and the identifier of the radio access device. The mapping relationship includes the identifier of the at least one target CSG and the identifier of the radio access device that communicates with the at least one target CSG.

Optionally, the first device is a mobility management controller, and after the first device obtains the identifier of the at least one target CSG based on the location range before the first moment, the method further includes: The first device sends, before the first moment, the identifier of the at least one target CSG to an MASG through a network controller.

Optionally, that the first device sends, before the first moment, the identifier of the at least one target CSG to an MASG through a network controller includes: The first device sends the identifier of the at least one target CSG to the MASG through the network controller at a fourth moment, where the fourth moment is before the first moment, and there is a preset time interval between the fourth moment and the first moment. The preset time interval is determined based on a moving speed of the mobile device.

Optionally, that the first device sends, before the first moment, the identifier of the at least one target CSG to an MASG through a network controller includes: The first device sends, before the first moment, a correspondence between the identifier of the at least one target CSG and the first moment to the MASG through the network controller.

Optionally, the first device is an MASG, and after the first device obtains the identifier of at least one target CSG based on the location range before the first moment, the method further includes: The first device establishes, before the first moment, a tunnel based on the identifier of the at least one target CSG and the at least one target CSG; and the first device sends downlink data of the mobile device to the at least one target CSG through the tunnel.

Optionally, that the first device establishes, before the first moment, a tunnel based on the identifier of the at least one target CSG and the at least one target CSG includes: The first device configures a correspondence used for tunnel forwarding for the at least one target CSG, where the correspondence used for tunnel forwarding includes the identifier of the at least one target CSG and tunnel information, and the tunnel information is used for tunnel encapsulation.

Optionally, the first device is a network controller, and after the first device obtains the identifier of the at least one target CSG based on the location range before the first moment, the method further includes: The first device sends the identifier of the at least one target CSG to an MASG before the first moment; and the first device configures, for the MASG, a forwarding relationship of a tunnel from the MASG to the at least one target CSG, where the forwarding relationship of the tunnel includes the identifier of the target CSG and tunnel information, and the tunnel information is used for tunnel encapsulation.

Optionally, that the first device configures, for the MASG, a forwarding relationship of a tunnel from the MASG to the at least one target CSG includes: The first device configures a forwarding relationship of a tunnel from the target CSG to the MASG for the at least one target CSG at a fifth moment, where the fifth moment is before the first moment, and there is a preset time interval between the fifth moment and the first moment. The preset time interval is determined based on a moving speed of the mobile device. The forwarding relationship includes the identifier of the target CSG and the tunnel information, and the tunnel information is used for tunnel encapsulation.

Optionally, the method further includes: The first device indicates the at least one target CSG to enable the correspondence used for tunnel forwarding at the first moment.

According to a second aspect, which is not covered by the claims, a CSG determining method is provided, including: An MASG receives an identifier that is of at least one target CSG and that is sent by a first device; the MASG establishes a tunnel with the at least one target CSG, where one CSG is corresponding to one tunnel; and the MASG sends a downlink data packet of a mobile device to each target CSG through the tunnel, where the downlink data packet is corresponding to a service requested by the mobile device.

If the MASG establishes a corresponding tunnel with one target CSG, the MASG sends the downlink data packet in a unicast manner. If the MASG establishes corresponding tunnels with a plurality of target CSGs, the MASG sends the downlink data packet in a multicast manner. The first device is a mobile management controller or a network controller. The at least one target CSG is determined by the first device based on a location range in which the mobile device is located at a first moment, and the at least one target CSG can provide downlink data transmission for the mobile device at the first moment.

According to a third aspect, which is not covered by the claims, a CSG determining method is provided, including: A mobile device periodically sends a first moment and a first location at which the mobile device is located the first moment to a first device. The first moment is earlier than a second moment, and the second moment is a moment at which the mobile device leaves a coverage range that is of an access device and to which the first location belongs. The mobile device is at least one of a mobile terminal device and a mobile relay device.

Optionally, the mobile device may further send a speed of the mobile device, the first moment, and the first location together to the first device. Alternatively, the mobile device may further send a speed and an acceleration of the mobile device, the first moment, and the first location together to the first device.

It should be noted that the "first moment" mentioned in the third aspect and the "first moment" mentioned in the first aspect or the second aspect are different moments. In addition, the "second moment" mentioned in the third aspect and the "second moment" mentioned in the first aspect or the second aspect are different moments. For example, the "first moment" mentioned in the third aspect may be equivalent to the "second moment" mentioned in the first aspect or the second aspect.

According to a fourth aspect, which is not covered by the claims, a CSG determining apparatus is provided, including units configured to implement the method steps provided in the first aspect or the method steps provided in the possible implementations of the first aspect.

In a design, the apparatus is a communication chip. The communication chip may include an input circuit or interface configured to send information or data, and an output circuit or interface configured to receive information or data.

In another design, the apparatus is a communication device. The communication device may include a transmitter configured to send information or data, and a receiver configured to receive information or data.

According to a fifth aspect, which is not covered by the claims, a CSG determining apparatus is provided, including: a transceiver unit, configured to receive an identifier that is of at least one target cell site gateway CSG and that is sent by a first device; and a processing unit, configured to establish a tunnel with the at least one target CSG. The transceiver unit is further configured to send downlink data of a mobile device to the at least one target CSG through the tunnel, and the downlink data packet is corresponding to a service requested by the mobile device.

The apparatus is an MASG or the apparatus is disposed on an MASG. The at least one target CSG is determined by the first device based on a location range in which the mobile device is located at a first moment, and the at least one target CSG can provide downlink data transmission for the mobile device at the first moment.

In a design, the apparatus is a communication chip. The communication chip may include an input circuit or interface configured to send information or data, and an output circuit or interface configured to receive information or data.

In another design, the apparatus is a communication device. The communication device may include a transmitter configured to send information or data, and a receiver configured to receive information or data.

According to a sixth aspect, which is not covered by the claims, a CSG determining apparatus is provided, including: a transceiver unit, configured to periodically send a first moment and a first location at which the mobile device is located the first moment to a first device. The first moment is earlier than a second moment, and the second moment is a moment at which a mobile device leaves a coverage range that is of an access device and to which the first location belongs.

The apparatus is the mobile device or the apparatus is disposed on a mobile device. The mobile device includes at least one of a mobile terminal device and a mobile relay device.

Optionally, the transceiver unit is further configured to send a speed of the apparatus, the first moment, and the first location together to the first device. Alternatively, the transceiver unit is further configured to send a speed and an acceleration of the apparatus, the first moment, and the first location together to the first device.

In a design, the apparatus is a communication chip. The communication chip may include an input circuit or interface configured to send information or data, and an output circuit or interface configured to receive information or data.

In another design, the apparatus is a communication device. The communication device may include a transmitter configured to send information or data, and a receiver configured to receive information or data.

According to a seventh aspect, which is not covered by the claims, a CSG determining communication device is provided, including a processor and a memory. The memory is configured to store a computer program, and the processor is configured to: invoke the computer program from the memory, and run the computer program, to enable the communication device to perform the communication method in any one of the first aspect to the third aspect and the implementations thereof.

Optionally, there are one or more processors, and there are one or more memories.

Optionally, the memory may be integrated with the processor, or the memory and the processor are separately disposed.

Optionally, the communication device further includes an output interface and an input interface.

According to an eighth aspect, which is not covered by the claims, a communication system is provided, including the communication device provided in the seventh aspect.

In a possible design, the communication system may further include another device interacting with the communication device in the solutions provided in the embodiments of this application.

According to a ninth aspect, which is not covered by the claims, a communication system is provided, including: a mobile device, configured to periodically send, to a mobility management controller, a second moment and a first location at which the mobile device is located the second moment, where the second moment is earlier than a moment at which the mobile device leaves a coverage range that is of an access device and to which the first location belongs; a mobility management controller, configured to: obtain, through calculation based on the first location and the second moment, a location range in which the mobile device is located at the first moment, and obtain an identifier of at least one CSG based on the location range before the first moment, where the second moment is earlier than the first moment, and the at least one target CSG can provide downlink data transmission for the mobile device at the first moment and is configured to send the identifier of the at least one target CSG to a network controller; the network controller, configured to send the identifier of the at least one target CSG to a multi-service aggregation site gateway MASG; and the MASG, configured to establish a tunnel with the at least one target CSG based on the identifier of the at least one target CSG before the first moment, where the first device sends downlink data of the mobile device to the at least one target CSG through the tunnel.

Optionally, the mobility management controller is further configured to: determine the first location and the second moment of the mobile device, where the first location is a location at which the mobile device is located at the second moment, and the second moment is earlier than the first moment; and obtain the location range through calculation based on the first location, the second moment, a preset speed, and preset duration, where the preset speed is a moving speed of the mobile device within the preset duration, and the preset duration is between the second moment and the first moment.

Optionally, the mobility management controller is further configured to: determine the first location, the second moment, and a speed of the mobile device, where the first location is a location at which the mobile device is located at the second moment, the speed is a moving speed of the mobile device, and the second moment is earlier than the first moment; and obtain the location range through calculation based on the first location, the second moment, the speed, and preset duration, where the preset duration is duration between the second moment and the first moment.

Optionally, the mobility management controller is further configured to: determine the first location, the second moment, a first speed, a first acceleration, a second location, a third moment, a second speed, and a second acceleration of the mobile device, where the first location is a location at which the mobile device is located at the second moment, the first speed is a moving speed of the mobile device at the second moment, the first acceleration is a moving acceleration of the mobile device at the second moment, the second location is a location at which the mobile device is located at the third moment, the second speed is a moving speed of the mobile device at the third moment, the second acceleration is a moving acceleration of the mobile device at the third moment, and both the second moment and the third moment are earlier than the first moment; and use a prediction algorithm to obtain, through calculation, the location range based on the first location, the second moment, the first speed, the first acceleration, the second location, the third moment, the second speed, the second acceleration, and the preset duration, where the preset duration is duration between the second moment and the first moment or duration between the third moment and the first moment.

Optionally, the MASG is configured to: obtain a mapping relationship from a controller (the network controller or the mobility management controller); determine, based on the location range, an identifier of a radio access device covering the location range; and obtain the identifier of the at least one target CSG according to the mapping relationship and the identifier of the radio access device. The mapping relationship includes the identifier of the at least one target CSG and the identifier of the radio access device that communicates with the at least one target CSG.

Optionally, the MASG is configured to send a correspondence used for tunnel forwarding to the at least one target CSG. The correspondence used for tunnel forwarding includes the identifier of the at least one target CSG and tunnel information, and the tunnel information is used for tunnel encapsulation.

Optionally, the mobility management controller is configured to: determine, based on the location range, an identifier of a radio access device covering the location range, and obtain the identifier of the at least one target CSG according to a mapping relationship and the identifier of the radio access device. The mapping relationship includes the identifier of the at least one target CSG and the identifier of the radio access device that communicates with the at least one target CSG.

Optionally, the mobility management controller is configured to send the identifier of the at least one target CSG to the network controller.

Optionally, the network controller is configured to obtain the mapping relationship from the mobility management controller.

Optionally, the network controller is configured to send the identifier of the at least one target CSG to the MASG before the first moment.

Optionally, the network controller is configured to send a correspondence used for tunnel forwarding to the at least one target CSG. The correspondence used for tunnel forwarding includes the identifier of the at least one target CSG and tunnel information, and the tunnel information is used for tunnel encapsulation.

According to a tenth aspect, which is not covered by the claims, a computer program product is provided. The computer program product includes a computer program (which may also be referred to as code or instructions). When the computer program is run, a computer is enabled to perform the method according to any one of the first aspect to the third aspect and the possible implementations thereof.

According to an eleventh aspect, which is not covered by the claims, a computer-readable medium is provided. The computer-readable medium stores a computer program (which may also be referred to as code or instructions). When the computer program is run on a computer, the computer is enabled to perform the method according to any one of the first aspect to the third aspect and the possible implementations thereof.

According to a twelfth aspect, which is not covered by the claims, a chip system is provided, including a memory and a processor. The memory is configured to store a computer program, and the processor is configured to invoke the computer program from the memory and run the computer program, to enable a communication device on which the chip system is installed performs the method according to any one of the first aspect to the third aspect and the possible implementations thereof.

The chip system may include an input circuit or interface configured to send information or data, and an output circuit or interface configured to receive information or data.

### BRIEF DESCRIPTION OF DRAWINGS

FIG. 1 is a schematic diagram of a communication scenario;
FIG. 2 is a schematic interaction diagram of an example of a CSG determining method according to this application;
FIG. 3 is a schematic interaction diagram of another example of a CSG determining method according to this application;
FIG. 4A and FIG. 4B are a schematic interaction diagram of still another example of a CSG determining method according to this application;
FIG. 5 is a schematic interaction diagram of still another example of a CSG determining method according to this application;
FIG. 6 is a schematic interaction diagram of still another example of a CSG determining method according to this application;
FIG. 7 is a schematic block diagram of an example of a CSG determining apparatus according to this application;
FIG. 8 is a schematic block diagram of another example of a CSG determining apparatus according to this application;
FIG. 9 is a schematic block diagram of still another example of a CSG determining apparatus according to this application;
FIG. 10 is a schematic block diagram of an example of a CSG determining communication device according to this application;
FIG. 11 is a schematic block diagram of an example of an MASG according to this application; and
FIG. 12 is a schematic block diagram of an example of a mobile device according to this application.

### DESCRIPTION OF EMBODIMENTS

The following describes technical solutions in this application with reference to the accompanying drawings.

As shown in FIG. 1, a communication system in this application may include one or more mobile devices, at least one access device, at least one CSG, an MASG, and a control device. The mobile device may include at least one of a mobile terminal device and a mobile relay (mobile relay) device. The mobile terminal device may be a mobile terminal device 141 shown in FIG. 1. The mobile relay device may be a mobile relay device 142 shown in FIG. 1. The access device may be an access device 131 or an access device 132 shown in FIG. 1. Each access device can perform wireless communication, for example, uplink data transmission or downlink data transmission, with a mobile device in a radio frequency coverage range of the access device. The access device can communicate with one or more CSGs. The CSG may be a CSG 121 or a CSG 122 shown in FIG. 1, and the CSG can communicate with one or more access devices. Any one of the following communication connections may be used between the CSG and the access device: a digital subscriber line (digital subscriber line, DSL), a fiber to the x (fiber to the x, FTTx), an optical transport line or an Ethernet line (including Ethernet links of various rates, a link aggregation group (link aggregation group, LAG), a flexible Ethernet (flexible Ethernet, FlexE)), and the like. The access device can send uplink data to the corresponding CSG, and the CSG can send downlink data to the corresponding access device. The MASG may be an MASG 101 shown in FIG. 1. A tunnel may be established between the CSG and the MASG through one or more edge nodes (edge node, EN). The tunnel can support a multi-protocol label switching (multi-protocol label switching, MPLS) technology. The MASG can communicate with a device in a core network, for example, a mobility management entity (mobility management entity, MME), a serving gateway (servicing gateway, SGW), a user plane function (user plane function, UPF) network element, a session management function (session management function, SMF) network element, and the like. Therefore, the MASG can send uplink data to the core network device, and/or receive downlink data from the core network device. The control device may include a mobility management controller 150 and a network controller 160 in FIG. 1.

The mobility management controller 150 may also be referred to as a mobile network controller, an access network controller, or the like. The mobility management controller 150 may communicate with the access devices in the communication system. The mobility management controller 150 may obtain coverage ranges of the access devices. The mobility management controller 150 may obtain and store a correspondence between the access device and the CSG, for example, a correspondence between an identifier of the access device and an identifier of the CSG. The mobility management controller 150 may obtain, from the access device, the one or more CSGs that can communicate with the access device. Alternatively, the correspondence between an access device and a CSG may be configured on the mobility management controller 150 in a static configuration manner. By way of example and not limitation, the mobility management controller 150 may be configured in the core network device, or the mobility management controller 150 is a core network device, for example, an access management network element. The access management network element is mainly used for mobility management, access management, and the like, and may be configured to implement functions, for example, lawful interception and access authorization/authentication, other than session management in functions of a mobility management entity (mobility management entity, MME). In a 5G communication system, the access management network element may be an access and mobility management function (access and mobility management function, AMF) network element. In a future communication system, the access management network element may still be the AMF network element, or may have another name. This is not limited in this embodiment of this application. It should be understood that the configuration manners of the mobility management controller enumerated above are merely examples for description, and this embodiment of this application is not limited thereto. For example, the mobility management controller may be configured in or may be a mobile edge computing (mobile edge computing, MEC) device, or the mobility management controller may be an independently configured device.

The network controller 160 may communicate with the MASG 101 and the mobility management controller 150. A communication connection between the network controller 160 and the mobility management controller 150 may include but is not limited to various DSL links, various optical fiber access links, optical transport links, Ethernet lines, or the like. Optionally, the network controller 160 may obtain the correspondence between an access device and a CSG from the mobility management controller 150. Alternatively, the network controller 160 may store the configured correspondence between an access device and a CSG in the static configuration manner. For example, the network controller 160 may be configured on or may be a software-defined networking (software-defined network, SDN) controller or a device used as a path computation element (path computation element, PCE).

In this embodiment of this application, the mobility management controller 150 and the network controller 160 may be integrated into one controller, or may be distributed on different devices. In FIG. 1, an example in which the mobility management controller 150 and the network controller 160 are distributed on different devices is used for description. If the mobility management controller 150 and the network controller 160 are integrated into one controller, interaction between the mobility management controller 150 and the network controller 160 is interaction between two modules on the controller.

In this embodiment of this application, a first device (for example, the network controller 160, the MASG 101, or the mobility management controller 150) in the communication system may determine, at a moment before a first moment, a location range in which the mobile device (for example, the mobile terminal device 141 or the mobile relay device 142) is located at the first moment, and further determine, based on the location range, a target CSG that can perform downlink data transmission with the mobile device at the first moment. In this way, the MASG may plan, based on the predetermined target CSG, a tunnel used for downlink data transmission, so that the mobile terminal can receive downlink data promptly when arriving at a range covered by an access device corresponding to the target CSG. This helps reduce a transmission latency and improve transmission reliability.

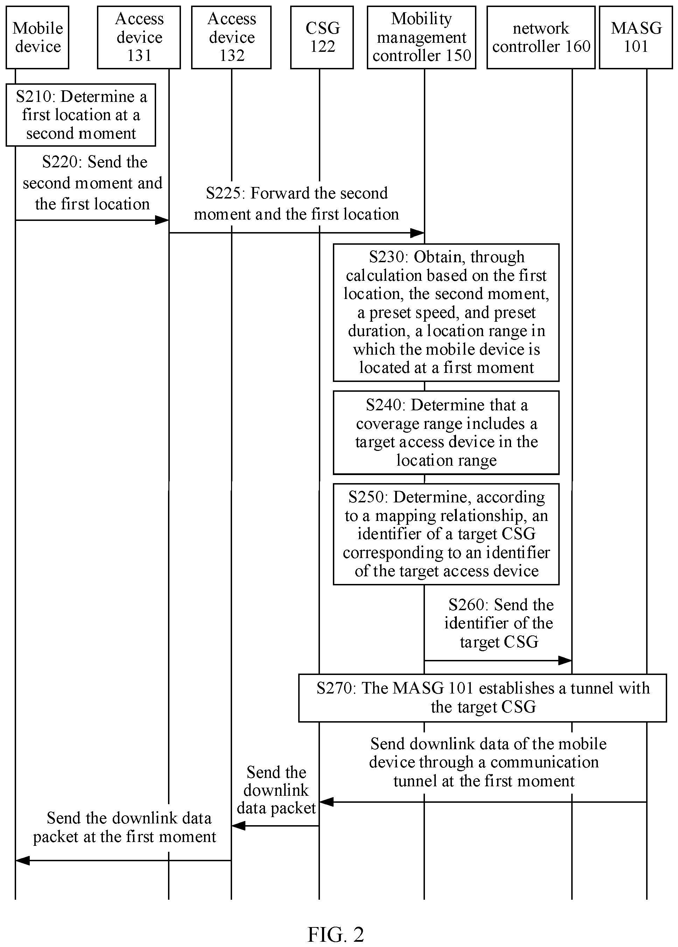

In an interaction procedure shown in FIG. 2, the first device is the mobility management controller 150. As shown in FIG. 1, the mobile device, for example, at least one of the mobile terminal device 141 and the mobile relay device 142, is in a coverage range of the access device 131 at a second moment. In a method provided in an embodiment corresponding to FIG. 2, the mobile device may move at a preset speed, or the mobile device may be located in a vehicle (for example, a train or a car) that moves at a preset speed. With reference to FIG. 1 and FIG. 2, the following describes in detail a mobile communication method provided in the embodiments of this application.

In S210, the mobile device may determine a first location at which the mobile device is located the second moment.

The first location may include a longitude and a latitude at which the mobile device is located at the second moment. Alternatively, the first location may include a geographical area (for example, a province, a city, or a district) in which the mobile device is located at the second moment. That the mobile device obtains the first location includes: The mobile device obtains the first location based on global positioning system (Global Positioning System, GPS) information, a BeiDou system, a Galileo system, or a global navigation satellite system (GLONASS). Alternatively, the mobile device may obtain the first location from a third-party server by using an installed application.

In S220, the mobile device may send the first location and the second moment to the access device 131 before the first moment.

The mobile device sends the first location and the second moment to the access device 131 through a message or a packet that complies with a communication protocol used when the mobile device communicates with the access device 131. The message that complies with the communication protocol includes the first location and the second moment. In a 5G scenario, the mobile device may perform communication through an N1 reference point between access management functions (access management function, AMF), namely, a service-based interface exhibited by AMF (service-based interface exhibited by AMF, NAMF) interface.

In S225, the access device 131 may send the first location and the second moment to the mobility management controller 150.

The access device may send the first location and the second moment to the mobility management controller 150 through a message or a packet that complies with a communication protocol used when the access device communicates with the mobility management controller 150. The message or the packet that complies with the communication protocol includes the first location and the second moment. The message or the packet that complies with the communication protocol may be carried in a form in the following Table 1. To be specific, the second moment is written into a field that is in the message or the packet complying with the communication protocol and that is corresponding to a timestamp, and the first location is written into a field that is in the message or the packet complying with the communication protocol and that is corresponding to a geographical location.

**Table 1**

| | |
|---|---|
| Timestamp | Second moment |
| Geographical location | First location (for example, geographical coordinates of the first location) |

Optionally, the mobile device or the access device 131 may further send an identifier of the mobile device when sending the first location and the second moment. When the mobile device is a mobile terminal device, the identifier of the mobile device may include an identifier of the mobile terminal device. When the mobile device is a mobile relay device, the identifier of the mobile device may include an identifier of a mobile terminal device served by the mobile relay device.

In S230, before the first moment, the mobility management controller 150 may obtain, through calculation based on the first location, the second moment, a preset speed, and preset duration, the location range in which the mobile device is located at the first moment.

It is assumed that the location range may have a central location. For example, the location range may be in a shape such as a circle, a square, or an equilateral triangle. In addition, a size of the location range may be a preset value. The preset value may be specified in the communication system or the communication protocol, or the preset value may be configured by an administrator, or there may be a correspondence between the preset value and the preset speed. If a distance between the location range (for example, the central location of the location range) and the first location is S, the preset speed is V, and the preset duration is T, S = V x T. The preset duration is duration between the second moment and the first moment. The preset duration may be specified in the communication system or the communication protocol, or the preset duration may be configured by the administrator and stored in the mobility management controller 150. The mobility management controller 150 may obtain the preset speed from a telecom operator (for example, a server of the operator) of the vehicle. Alternatively, the preset speed may be configured by the administrator and stored in the mobility management controller 150. In this embodiment of this application, the mobility management controller 150 may obtain the coverage ranges of the access devices. For example, the access device may report the coverage range of the access device to the mobility management controller 150, or the coverage ranges of the access devices may be configured by the administrator in the mobility management controller 150.

In S240, before the first moment, the mobility management controller 150 may determine that the coverage range includes an identifier of the access device (which may also be referred to as a target access device) in the location range determined in S230.

The target access device in the location range may include one or more access devices.

In S250, before the first moment, the mobility management controller 150 may determine, according to a mapping relationship, an identifier of a target CSG corresponding to the identifier of the target access device.

The mobility management controller 150 may obtain the mapping relationship between the identifier of the access device and the identifier of the CSG. The access device can communicate with the CSG corresponding to the access device. One access device may be corresponding to one or more CSGs. One CSG may be corresponding to one or more access devices. This is not particularly limited in this application. The mobility management controller 150 may obtain an identifier of at least one target CSG according to the mapping relationship and the identifier that is of the access device and that is obtained in S240.

In S260, the mobility management controller 150 may send the identifier of the target CSG to the network controller 160 before the first moment.

Optionally, the mobility management controller 150 may send the identifier of the mobile device and the identifier of the target CSG together to the network controller 160.

In S270, before the first moment, the network controller 160 may control, based on the identifier of the target CSG, the MASG 101 to establish a tunnel with the target CSG.

A tunnel is established between the MASG 101 and the at least one target CSG, that is, one tunnel is established between the MASG 101 and each target CSG. That the MASG 101 establishes a tunnel with one target CSG is used as an example. The network controller 160 may separately send, to the MASG 101 and the target CSG, a correspondence used for tunnel forwarding. The correspondence used for tunnel forwarding includes an identifier of the target CSG and tunnel information. The tunnel information is used for tunnel encapsulation. When the at least one target CSG is one target CSG, the correspondence that is sent by the network controller 160 to the MASG 101 and that is used for tunnel forwarding is a unicast forwarding table. When the at least one target CSG is a plurality of target CSGs, the correspondence that is sent by the network controller 160 to the MASG 101 and that is used for tunnel forwarding is a multicast forwarding table. Optionally, the network controller 160 may further send a correspondence between the tunnel and the identifier of the mobile device to the MASG 101. Table 2 shows a forwarding table provided in this embodiment of this application. In this table, the identifier of the mobile device may be used as a downlink service identifier, indicating a downlink service requested by the mobile device. An index of the CSG may be used as the identifier of the target CSG. In another implementation, Table 2 may include only one target CSG and one tunnel identifier corresponding to the target CSG.

**Table 2**

| Downlink service identifier (for example, an identifier of a mobile device corresponding to a destination address of a downlink data packet) | Target CSG (for example, an index of the CSG) | Tunnel identifier |
|---|---|---|
| Identifier#A | Index# 1 | Identifier#1 |
| | Index#2 | Identifier#2 |
| | ... | ... |
| | Index#i | Identifier#i |

For example, the tunnel may be a multi-protocol label switching (multi-protocol label switching, MPLS) tunnel. In other words, in this embodiment of this application, a fixed network may use the MPLS technology. In this embodiment of this application, the CSG and the MASG may be used as label edge routers (label edge router, LER) in the MPLS technology, and the edge node may be used as a label switching router (label switching router, LSR). For the LSR, a forwarding plane only needs to perform label packet forwarding, and a label forwarding information base (label forwarding information base, LFIB) can be used. For the LER, a forwarding plane not only needs to perform label packet forwarding, but also needs to perform internet protocol (internet protocol, IP) packet forwarding, and a forwarding information base (forwarding information base, FIB) may be used for the IP packet forwarding. The MASG generates a router information base (router information base, RIB) based on an IP routing protocol, and then performs label distribution by using a label distribution protocol (label distribution protocol, LDP), to generate the label forwarding information base LFIB, to establish one or more label switched paths (label switched path, LSP) from the MASG to the CSG. The tunnel identifier may be an identifier (or an index) of the LSP. Table 3 shows a forwarding table provided in this embodiment of this application. In Table 3, the identifier of the mobile device may be used as a downlink service identifier, indicating a downlink service requested by the mobile device. An index of the CSG may be used as the identifier of the target CSG. The identifier of the LSP may be used as the tunnel identifier. In another implementation, Table 3 may include only one target CSG and one label forwarding path corresponding to the target CSG.

**Table 3**

| Downlink service identifier | Target CSG | Label forwarding path |
|---|---|---|
| (for example, an identifier of a mobile device corresponding to a destination address of a downlink data packet) | (for example, an index of the CSG) | |
| Identifier#A | Index#1 | LSP#1 |
| | Index#2 | LSP#2 |
| | ... | ... |
| | Index#i | LSP#i |

For example, the tunnel may be an IP tunnel. The network controller 160 may control the MASG to establish an IP forwarding table, to send the downlink data packet to each associated CSG through unicast or multicast along the tunnel. The tunnel identifier may be an IP address. Table 4 shows a forwarding table provided in this embodiment of this application. In this table, the identifier of the mobile device may be used as a downlink service identifier, indicating a downlink service requested by the mobile device. An index of the CSG may be used as the identifier of the target CSG. An IP address of the CSG can be used as a tunnel identifier. In another implementation, Table 4 may include only one target CSG and one IP tunnel corresponding to the target CSG.

**Table 4**

| Downlink service identifier (for example, an identifier of a mobile device corresponding to a destination address of a downlink data packet) | Target CSG (for example, an index of the CSG) | IP tunnel |
|---|---|---|
| Identifier#A | Index#1 | IP address#1 |
| | Index#2 | IP address#2 |
| | ... | ... |
| | Index#i | IP address#i |

For example, the tunnel may be a deterministic networking (Deterministic Networking, DetNet) tunnel. In this embodiment of this application, the fixed network may use a DetNet technology. The fixed network may use DetNet encapsulation to transmit data. The network controller may control the MASG to establish a DetNet forwarding table, to send the downlink data packet to each associated CSG along the tunnel in a unicast or multicast manner.

Optionally, the mobility management controller 150 may further send a correspondence between the target CSG and the first moment to the network controller 160. The network controller 160 may determine, according to the correspondence, that the target CSG can perform downlink data transmission with the mobile device at the first moment. The network controller 160 may send, to the MASG 101, a correspondence between the tunnel and the first moment or the correspondence between the target CSG and the first moment. The MASG 101 may determine, according to the correspondence, to enable the tunnel at the first moment, or send downlink data of the mobile device to the target CSG at the first moment.

Optionally, the mobility management controller 150 may send the correspondence between the target CSG and the first moment to the network controller 160 at a third moment. The third moment is earlier than the first moment, and duration between the third moment and the first moment is preset duration. The preset duration may be corresponding to a moving speed of the mobile device. For example, a higher moving speed of the mobile device indicates that the preset duration may be shorter. For example, there may be a linear relationship between the preset duration and the moving speed of the mobile device, which is represented as T = A + B/V, where A and B are constants, T is the duration, and V is the speed. The preset duration may be set by considering a latency of the tunnel establishment. After receiving the identifier of the target CSG, the fixed network control 160 controls the MASG 101 to establish the tunnel with the target CSG, and the MASG 101 may enable the tunnel after the tunnel is established.

For example, if a location range in which the mobile device is located at the first moment is within the coverage range of the access device 132 shown in FIG. 1, the target CSG is the CSG 122. The MASG 101 establishes a tunnel with the CSG 122 through an EN 113 and an EN 114. A tunnel used to transmit the downlink data of the mobile device is established between the MASG 101 and the CSG 121 at the second moment. At the second moment, after receiving the downlink data of the mobile device from a core network, the MASG 101 needs to send the downlink data (through an EN 111 and an EN 112) to the CSG 121 through the tunnel. The CSG 121 sends the downlink data to the access device 131. The access device 131 can send the downlink data to the mobile device at the second moment. The mobile device moves to the coverage range of the access device 132 at the first moment. As shown above, the tunnel has been established between the MASG 101 and the CSG 122 before the first moment. At the first moment, after receiving the downlink data of the mobile device from the core network, the MASG 101 sends the downlink data (through the EN 113 and the EN 114) to the CSG 122 through the tunnel. The CSG 122 sends the downlink data to the access device 132. The access device 132 can send the downlink data to the mobile device at the first moment. In this way, when the mobile device moves and an access device handover is performed, communication interruption still does not occur.

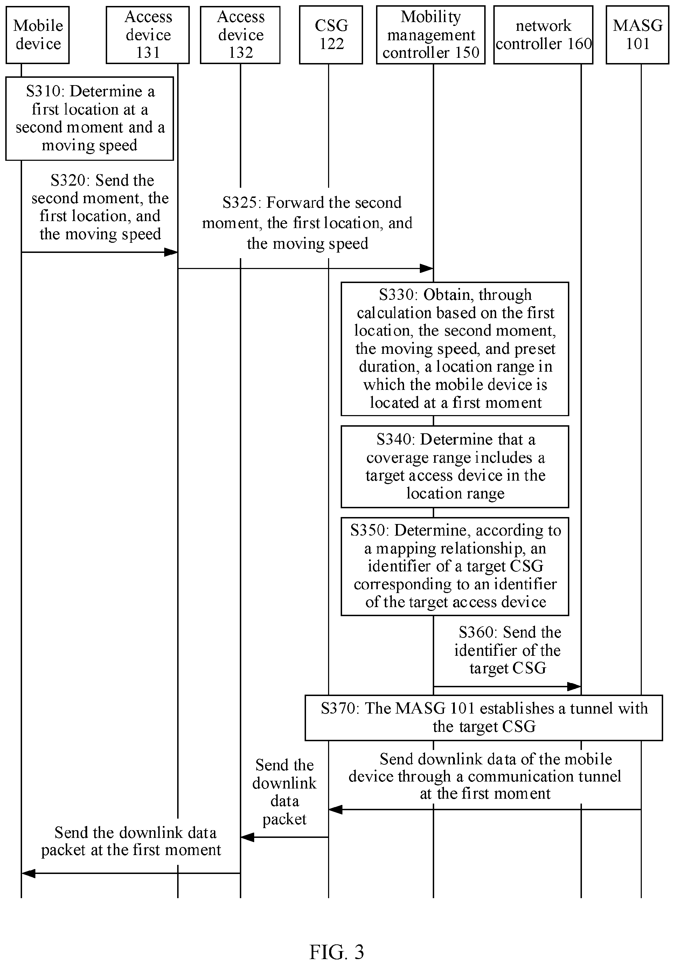

In an interaction procedure shown in FIG. 3, the first device is the mobility management controller 150. As shown in FIG. 1, the mobile device, for example, at least one of the mobile terminal device 141 and the mobile relay device 142, is in the coverage range of the access device 131 at the second moment. In the method provided in an embodiment corresponding to FIG. 3, the mobile device may determine a moving speed. The moving speed may be an instantaneous speed of the mobile device at the second moment, or the moving speed may include an average speed detected by the mobile device before the second moment. With reference to FIG. 1 and FIG. 3, the following describes in detail a mobile communication method provided in the embodiments of this application.

For example, the moving speed may be a vector including a moving direction, or the moving speed may also indicate a scalar of the speed. The mobile device may determine the moving speed based on, for example, GPS information, or the mobile device may determine the moving speed by using a built-in sensor, for example, a gyroscope, an acceleration sensor, or the like.

In S320, the mobile device may send the first location, the second moment, and the moving speed to the access device 131.

In S325, the access device 131 may send the first location, the second moment, and the moving speed to the mobility management controller 150.

For example, the first location, the second moment, and the moving speed may be carried in a corresponding packet or message that complies with a communication protocol for transmission. Table 5 shows a manner of carrying the first location, the second moment, and the moving speed according to the embodiment of this application. The second moment is written into a field that is in a message or a packet complying with the communication protocol and that is corresponding to a timestamp, and the first location is written into a field that is in the message or the packet complying with the communication protocol and that is corresponding to a geographical location, and the moving speed is written into a field that is in the message or the packet complying with the communication protocol and that is corresponding to a speed.

**Table 5**

| | |
|---|---|
| Timestamp | Second moment |
| Geographical location | First location (for example, geographical coordinates of the first location) |
| Speed | Moving speed (for example, an instantaneous speed at the second moment) |

In S330, the mobility management controller 150 may obtain, through calculation based on the first location, the second moment, the moving speed, and the preset duration, the location range in which the mobile device is located at the first moment. Different from the method provided in the embodiment corresponding to FIG. 2, in the method provided in the embodiment corresponding to FIG. 3, the preset speed in the embodiment corresponding to FIG. 2 is replaced with the moving speed provided in the embodiment corresponding to FIG. 3. For another step in the method provided in the embodiment corresponding to FIG. 3, refer to the step corresponding to the method provided in the embodiment corresponding to FIG. 2. Details are not described herein again.

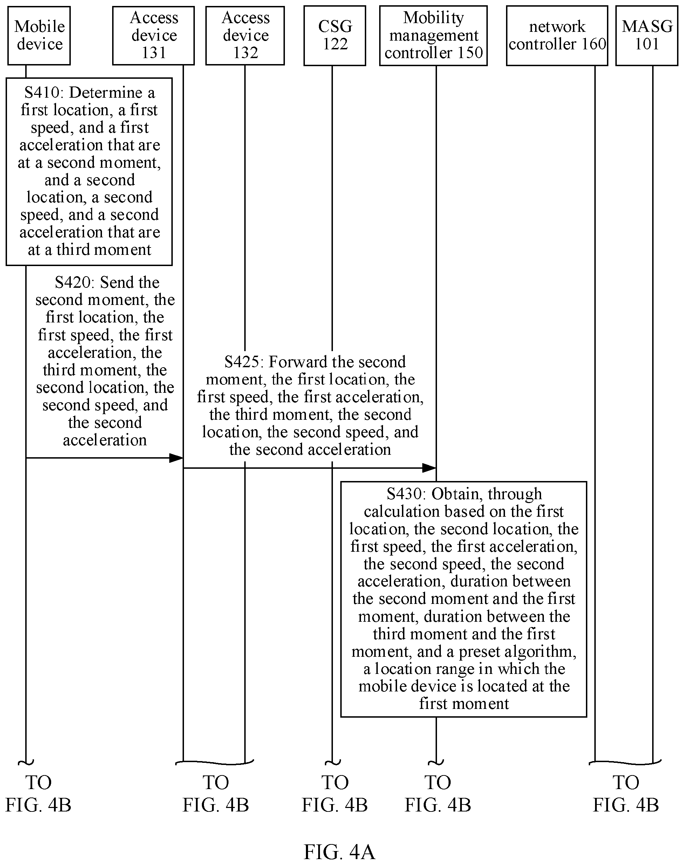

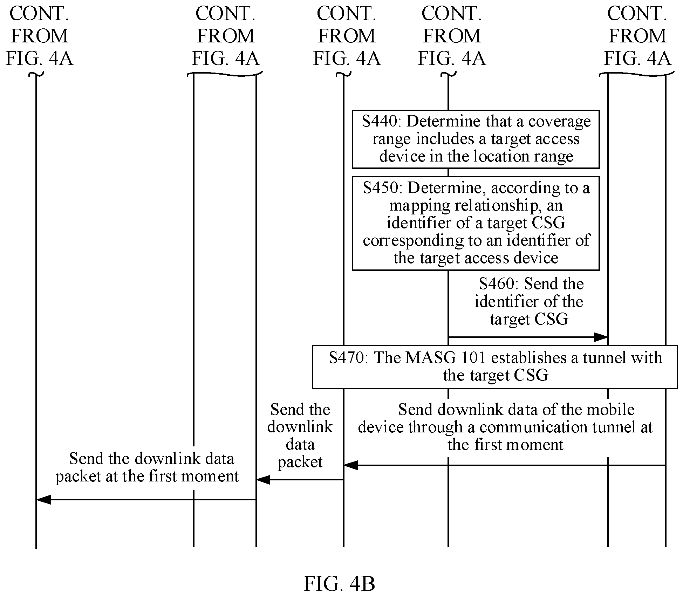

In an interaction procedure shown in FIG. 4A and FIG. 4B, the first device is the mobility management controller 150. As shown in FIG. 1, the mobile device, for example, at least one of the mobile terminal device 141 and the mobile relay device 142, is in the coverage range of the access device 131 at the second moment. In the method provided in the embodiment corresponding to FIG. 4A and FIG. 4B, the mobile device may determine the first location in which the mobile device is located at the second moment, a first speed at the second moment, and an acceleration at the second moment. With reference to FIG. 1, and FIG. 4A and FIG. 4B, the following describes in detail a mobile communication method provided in the embodiments of this application. In the following description, different steps or content of the embodiment corresponding to FIG. 4A and FIG. 4B and the embodiment corresponding to FIG. 2 are described, and for same content, refer to corresponding content of the embodiment corresponding to FIG. 2.

In S410, the mobile device may determine the first location, the first speed, and a first acceleration that are at the second moment, and may further determine a second location, a second speed, and a second acceleration that are at the third moment.

The first location is the longitude and the latitude of the mobile device at the second moment. The second location is a longitude and a latitude of the mobile device at the third moment. Alternatively, the first location may further include a geographical area (for example, a province, a city, or a district) in which the mobile device is located at the second moment, and the second location may further include a geographical area in which the mobile device is located at the third moment. Specifically, the mobile device may determine the first location and the second location based on, for example, GPS information. Alternatively, the mobile device may obtain the first location and the second location from a third-party server by using an installed application. The mobile device may determine the first speed, the first acceleration, the second speed, and the second acceleration based on, for example, the GPS information. Alternatively, the mobile device may determine the first speed, the first acceleration, the second speed, and the second acceleration by using a built-in sensor, for example, a gyroscope, an acceleration sensor, or the like.

In S420, before the first moment, the mobile device may send the second moment, the third moment, the first location, the second location, the first speed, the first acceleration, the second speed, and the second acceleration to the access device 131.

For sending manners of the second moment, the third moment, the first location, the second location, the first speed, the first acceleration, the second speed, and the second acceleration, refer to the parameter sending method used by the mobile device in the embodiment corresponding to FIG. 2 or the embodiment corresponding to FIG. 3.

In S425, the access device 131 may send the parameters received in S420 to the mobility management controller 150.

For sending manners of the second moment, the third moment, the first location, the second location, the first speed, the first acceleration, the second speed, and the second acceleration, refer to the parameter sending method used by the access device 131 in the embodiment corresponding to FIG. 2 or the embodiment corresponding to FIG. 3.

In S430, before the first moment, the mobility management controller 150 may obtain, through calculation based on the first location, the second location, the first speed, the first acceleration, the second speed, the second acceleration, the preset duration, and a preset algorithm, the location range in which the mobile device is located at the first moment.

The preset duration is duration between the second moment and the first moment, or the preset duration is duration between the third moment and the first moment. The preset algorithm may include but is not limited to an algorithm such as a least square method, a Kalman filtering (Kalman filtering) algorithm, a random forest (random forest) algorithm, or a neural network algorithm.

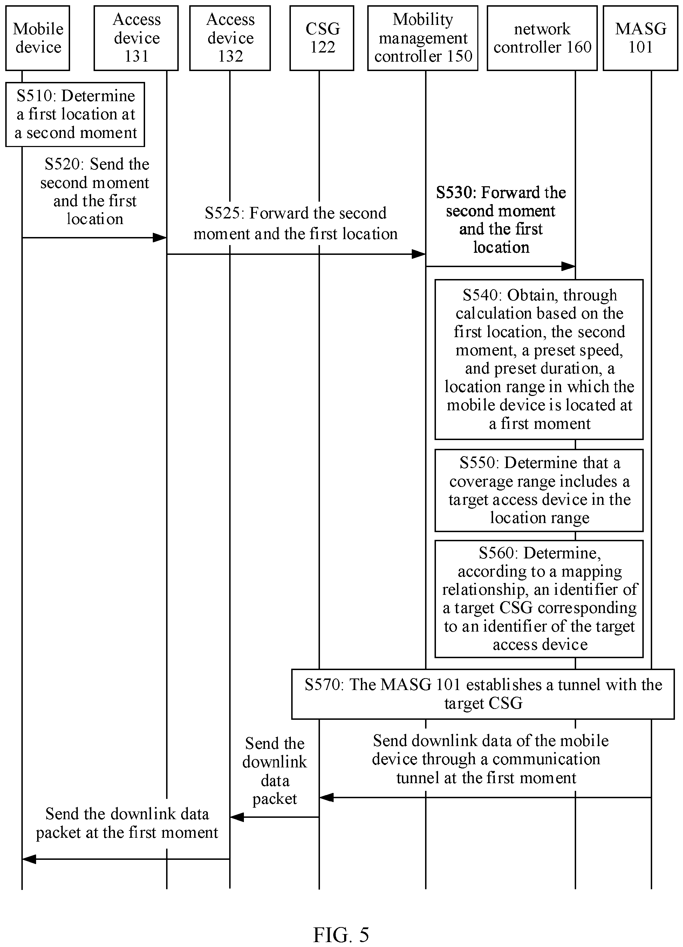

In an interaction procedure shown in FIG. 5, the first device is the network controller 160. As shown in FIG. 1, the mobile device, for example, at least one of the mobile terminal device 141 and the mobile relay device 142, is in a coverage range of the access device 131 at a second moment. In the method provided in the embodiment corresponding to FIG. 5, the mobile device may determine the first location at which the mobile device is located at the second moment. With reference to FIG. 1 and FIG. 5, the following describes in detail a mobile communication method provided in the embodiments of this application. In the following description, different steps or content of the embodiment corresponding to FIG. 5 and the embodiment corresponding to FIG. 2 are described, and for same content, refer to corresponding content of the embodiment corresponding to FIG. 2.

For specific content of S510, refer to S210 in the embodiment corresponding to FIG. 2. For specific content of S520, refer to S220 in the embodiment corresponding to FIG. 2. For specific content of S525, refer to S225 in the embodiment corresponding to FIG. 2.

Optionally, the mobile device or the access device 131 may further send the identifier of the mobile device when sending the first location and the second moment.

In S530, the mobility management controller 150 may send the second moment and the first location to the network controller 160 before the first moment. The mobility management controller 150 may communicate with the network controller 160 over a communication protocol such as a network configuration protocol (network configuration protocol, NETCONF), a representational state transfer protocol (representational state transfer configuration protocol, RESTCONF), or a JavaScript object notation (JavaScript object notation, JSON) protocol. An interface between the mobility management controller 150 and the network controller 160 may be a YANG or application programming interface (application programming interface, API) extension interface.

In S540, the network controller 160 may obtain, through calculation based on the first location, the second moment, the preset speed, and the preset duration, the location range in which the mobile device is located at the first moment.

For that the network controller 160 obtains the location range in which the mobile device is located at the first moment in S540, refer to the method used by the mobility management controller 150 in the embodiment corresponding to FIG. 2. Details are not described herein again.

In S550, before the first moment, the network controller 160 may determine that the coverage range includes an identifier of the access device (which may be referred to as a target access device) in the location range determined in S540.

For a method for obtaining the identifier of the access device by the network controller 160 in S550, refer to S250 used by the mobility management controller 150 in the embodiment corresponding to FIG. 2. Details are not described herein again. The network controller 160 may obtain, from the mobility management controller 150, a mapping relationship between the identifier of the access device and the identifier of the CSG.

In S560, before the first moment, the network controller 160 may determine, according to the mapping relationship, an identifier of a target CSG corresponding to the identifier of the target access device.

For a method for obtaining the identifier of the CSG by the network controller 160 in S560, refer to S260 used by the mobility management controller 150 in the embodiment corresponding to FIG. 2. Details are not described herein again.

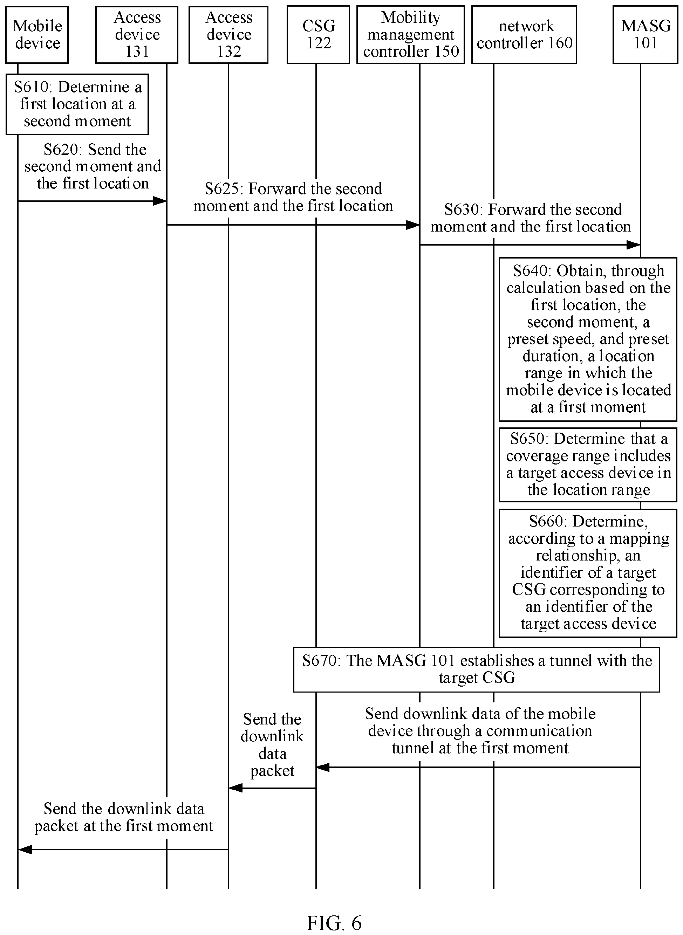

In an interaction procedure shown in FIG. 6, the first device is the MASG 101. As shown in FIG. 1, the mobile device, for example, at least one of the mobile terminal device 141 and the mobile relay device 142, is in a coverage range of the access device 131 at a second moment. In the method provided in the embodiment corresponding to FIG. 6, the mobile device may determine the first location at which the mobile device is located at the second moment. With reference to FIG. 1 and FIG. 6, the following describes in detail a mobile communication method provided in the embodiments of this application. In the following description, different steps or content of the embodiment corresponding to FIG. 6 and the embodiment corresponding to FIG. 2 are described, and for same content, refer to corresponding content of the embodiment corresponding to FIG. 2.

For methods of S610 to S625, refer to corresponding content of S210 to S225 in the embodiment corresponding to FIG. 2.

In S630, the mobility management controller 150 may send, through the network controller 160, the second moment and the first location to the MASG 101 before the first moment.

S630 includes: The mobility management controller 150 sends the second moment and the first location to the network controller 160 before the first moment, and the network controller 160 sends the second moment and the first location to the MASG 101. For a method for sending, by the mobility management controller 150, the second moment and the first location to the network controller 160, refer to corresponding content of S530 in the embodiment corresponding to FIG. 5. The network controller 160 may communicate with the MASG 101 over a communication protocol such as a NETCONF, a RESTCONF, or a JSON protocol. An interface between the network controller 160 and the MASG 101 may be a YANG or API extension interface.

In S640, the MASG 101 may obtain, through calculation based on the first location, the second moment, the preset speed, and the preset duration, the location range in which the mobile device is located at the first moment.

For details about how the MASG 101 obtains the location range in which the mobile device is located at the first moment, refer to the method used by the mobility management controller 150 in the embodiment corresponding to FIG. 2.

In S650, before the first moment, the MASG 101 may determine that the coverage range includes an identifier of the access device (which may be referred to as a target access device) in the location range determined in S640.

For a method for obtaining the identifier of the access device by the MASG 101, refer to the method used by the mobility management controller 150 in the embodiment corresponding to FIG. 2. For example, the network controller 160 may obtain the coverage ranges of the access devices from the mobility management controller 150, so that the MASG 101 may obtain the coverage ranges of the access devices from the network controller 160. Further, the MASG 101 may determine the target access device based on the coverage ranges of the access devices and the location range. The network controller 160 may obtain, from the mobility management controller 150, a mapping relationship between the identifier of the access device and the identifier of the CSG. The network controller 160 may send the mapping relationship to the MASG 101.

In S660, before the first moment, the MASG 101 may determine, according to the mapping relationship, an identifier of a target CSG corresponding to the identifier of the target access device.

For a method for determining the identifier of the target CSG by the MASG 101, refer to the method used by the mobility management controller 150 in the embodiment corresponding to FIG. 2.

According to the method provided in this embodiment of this application, the first device in the foregoing embodiment can determine, based on parameters reported by the mobile device, for example, a location at a current moment, a speed at the current moment, and the current moment, a target radio access device that can provide a downlink data transmission service for the mobile device at a subsequent specific moment or time point, and further determine a target CSG that communicates with the target radio access device. A tunnel is established between an MASG and the target CSG before the subsequent specific moment or time point. When receiving, at the subsequent specific moment or time point, downlink data that needs to be sent to the mobile device, the MASG may send the downlink data to the target CSG through the tunnel established in advance, so that the target CSG sends the downlink data to the mobile device through the target radio access device. This can ensure service transmission continuity and reduce a data transmission latency. For example, this facilitates transmission of an ultra-reliable low-latency communication (ultra-reliable low-latency communication, URLLC) service, and improves communication reliability and user experience.

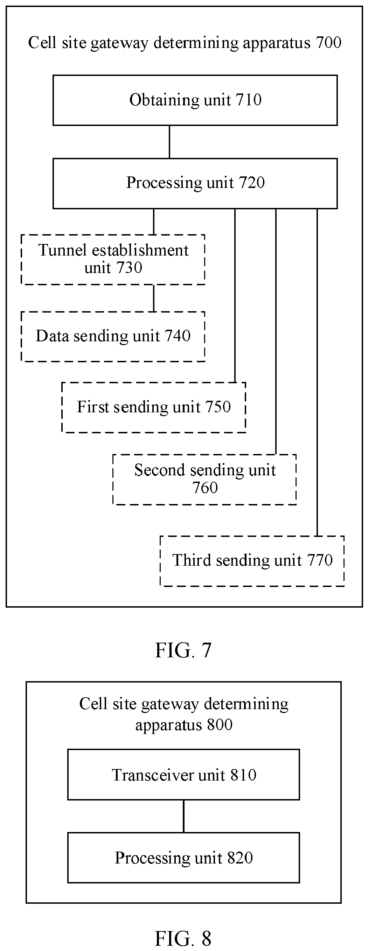

FIG. 7 is a schematic block diagram of an example of a CSG determining apparatus 700 according to this application. The apparatus 700 may be a first device (for example, a mobile management control device, a fixed network control device, or an MASG), or may be a chip or a circuit, for example, a chip or a circuit that may be disposed on the first device.

As shown in FIG. 7, the apparatus 700 includes:
an obtaining unit 710, configured to obtain, before a first moment, a location range in which a mobile device is located at the first moment; and
a processing unit 720, configured to obtain an identifier of at least one target CSG based on the location range before the first moment. The at least one target CSG can provide downlink data transmission for the mobile device at the first moment.

Optionally, the obtaining unit 710 is specifically configured to: determine a first location and a second moment of the mobile device, where the first location is a location at which the mobile device is located at the second moment, and the second moment is earlier than the first moment; and obtain the location range through calculation based on the first location, the second moment, a preset speed, and preset duration, where the preset speed is a moving speed of the mobile device within the preset duration, and the preset duration is between the second moment and the first moment.

Optionally, the obtaining unit 710 is specifically configured to: determine a first location, a second moment, and a speed of the mobile device, where the first location is a location at which the mobile device is located at the second moment, the speed is a moving speed of the mobile device, and the second moment is earlier than the first moment; and obtain the location range through calculation based on the first location, the second moment, the speed, and preset duration, where the preset duration is duration between the second moment and the first moment.

Optionally, the obtaining unit 710 is specifically configured to: determine a first location, a second moment, a first speed, a first acceleration, a second location, a third moment, a second speed, and a second acceleration of the mobile device, where the first location is a location at which the mobile device is located at the second moment, the first speed is a moving speed of the mobile device at the second moment, the first acceleration is a moving acceleration of the mobile device at the second moment, the second location is a location at which the mobile device is located at the third moment, the second speed is a moving speed of the mobile device at the third moment, the second acceleration is a moving acceleration of the mobile device at the third moment, and both the second moment and the third moment are earlier than the first moment; and use a prediction algorithm to obtain, through calculation, the location range based on the first location, the second moment, the first speed, the first acceleration, the second location, the third moment, the second speed, the second acceleration, and the preset duration, where the preset duration is duration between the second moment and the first moment or duration between the third moment and the first moment.

Optionally, the apparatus 700 is configured in a multi-service aggregation site gateway MASG or the apparatus is an MASG, and the processing unit 720 is specifically configured to: obtain a mapping relationship from a controller; determine, based on the location range, an identifier of a radio access device covering the location range; and obtain the identifier of the at least one target CSG according to the mapping relationship and the identifier of the radio access device. The mapping relationship includes the identifier of the at least one target CSG and the identifier of the radio access device that communicates with the at least one target CSG.

Optionally, the apparatus 700 is configured in the MASG or the apparatus is the MASG, and the apparatus 700 further includes: a tunnel establishment unit 730, configured to establish, before the first moment, a tunnel based on the identifier of the at least one target CSG and the at least one target CSG; and a data sending unit 740, configured to send downlink data of the mobile device to the at least one target CSG through the tunnel at the first moment.

Optionally, the tunnel establishment unit 730 is specifically configured to: send a correspondence used for tunnel forwarding to the at least one target CSG. The correspondence used for tunnel forwarding includes the identifier of the at least one target CSG and tunnel information, and the tunnel information is used for tunnel encapsulation.

Optionally, the apparatus 700 is configured in a controller or the apparatus is a controller, and the processing unit 720 is specifically configured to: determine, based on the location range, an identifier of a radio access device covering the location range; and obtain the identifier of the at least one target CSG according to a mapping relationship and the identifier of the radio access device. The mapping relationship includes the identifier of the at least one target CSG and the identifier of the radio access device that communicates with the at least one target CSG.

Optionally, the controller is a mobility management controller, and the apparatus 700 further includes a first sending unit 750, configured to send the identifier of the at least one target CSG to a network controller.

Optionally, the controller is a network controller, and the obtaining unit 710 is further configured to obtain the mapping relationship from a mobility management controller.

Optionally, the apparatus 700 further includes a second sending unit 760, configured to send the identifier of the at least one target CSG to an MASG before the first moment.

Optionally, the apparatus 700 further includes a third sending unit 770, configured to send a correspondence used for tunnel forwarding to the at least one target CSG. The correspondence used for tunnel forwarding includes the identifier of the at least one target CSG and tunnel information, and the tunnel information is used for tunnel encapsulation.

Optionally, the unit (for example, the obtaining unit 710, the tunnel establishment unit 730, the data sending unit 740, the first sending unit 750, the second sending unit 760, or the third sending unit 770) having a receiving or sending function may include a communication interface, for example, an output interface. Functions of an input interface and the output interface may be implemented by using a transceiver circuit or a dedicated transceiver chip.

It may be considered that the processing unit 720 may be implemented by using a dedicated processing chip, a processing circuit, a processing unit, or a general-purpose chip.

Functions and actions of the modules or units in the apparatus 700 enumerated above are merely examples for description. When the apparatus 700 is configured in or is the first device, the modules or units in the apparatus 700 may be configured to perform the actions or processing processes performed by the first device in the foregoing method. Herein, to avoid repetition, detailed descriptions thereof are omitted.

For concepts, explanations, detailed descriptions, and other steps of the apparatus 700 that are related to the technical solutions provided in the embodiments of this application, refer to the descriptions of the content in the foregoing methods or other embodiments. Details are not described herein again.

FIG. 8 is a schematic block diagram of an example of a cell site gateway determining apparatus 800 according to this application.

The apparatus 800 may be an MASG, or may be a chip or a circuit, for example, a chip or a circuit that may be disposed on the MASG.

As shown in FIG. 8, the apparatus 800 includes a transceiver unit 810 and a processing unit 820.

The transceiver unit 810 is configured to receive an identifier that is of at least one target cell site gateway CSG and that is sent by a first device. The processing unit 820 is configured to establish a tunnel with the at least one target CSG. The transceiver unit 810 is further configured to send downlink data of a mobile device to the at least one target CSG through the tunnel, and the downlink data packet is corresponding to a service requested by the mobile device.

Optionally, the apparatus is configured in or is the MASG.

The at least one target CSG is determined by the first device based on a location range in which the mobile device is located at a first moment, and the at least one target CSG can provide downlink data transmission for the mobile device at the first moment.

Alternatively, the transceiver unit 810 may be an input interface and an output interface. Functions of the input interface and the output interface may be implemented by using a transceiver circuit or a dedicated transceiver chip.

It may be considered that the processing unit 820 may be implemented by using a dedicated processing chip, a processing circuit, a processing unit, or a general-purpose chip.

Functions and actions of the modules or units in the apparatus 800 enumerated above are merely examples for description. When the apparatus 800 is configured in or is the MASG, the modules or units in the apparatus 800 may be configured to perform the actions or processing processes performed by the MASG in the foregoing method. Herein, to avoid repetition, detailed descriptions thereof are omitted.

For concepts, explanations, detailed descriptions, and other steps of the apparatus 800 that are related to the technical solutions provided in the embodiments of this application, refer to the descriptions of the content in the foregoing methods or other embodiments. Details are not described herein again.

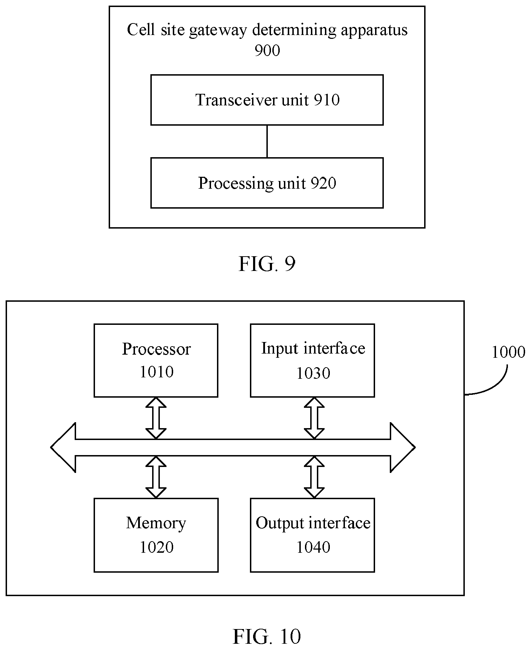

FIG. 9 is a schematic block diagram of an example of a cell site gateway determining apparatus 900 according to this application.

The apparatus 900 may be a mobile device (for example, a mobile terminal device or a mobile relay device), or may be a chip or a circuit, for example, a chip or a circuit that may be disposed on an MASG.

As shown in FIG. 9, the apparatus 900 includes a transceiver unit 910 and a processing unit 920.

The processing unit 920 is configured to determine a first location at which the mobile device is located at a first moment.

The transceiver unit 910 is configured to periodically send the first moment and the first location at which the mobile device is located the first moment to a first device. The first moment is earlier than a second moment, and the second moment is a moment at which the mobile device leaves a coverage range that is of an access device and to which the first location belongs.

Optionally, the transceiver unit 910 is further configured to send a speed of the apparatus, the first moment, and the first location together to the first device.

Optionally, the transceiver unit 910 is further configured to send a speed and an acceleration of the apparatus, the first moment, and the first location together to the first device.

Optionally, the mobile device includes the mobile terminal device or the mobile relay device.

Alternatively, the transceiver unit 910 may be an input interface and an output interface. Functions of the input interface and the output interface may be implemented by using a transceiver circuit or a dedicated transceiver chip.

It may be considered that the processing unit may be implemented by using a dedicated processing chip, a processing circuit, a processing unit, or a general-purpose chip.

Functions and actions of the modules or units in the apparatus 900 enumerated above are merely examples for description. When the apparatus 900 is configured in or is the mobile device, the modules or units in the apparatus 900 may be configured to perform the actions or processing processes performed by the mobile device in the foregoing method. Herein, to avoid repetition, detailed descriptions thereof are omitted.

For concepts, explanations, detailed descriptions, and other steps of the apparatus 900 that are related to the technical solutions provided in the embodiments of this application, refer to the descriptions of the content in the foregoing methods or other embodiments. Details are not described herein again.

According to the foregoing method, FIG. 10 is a schematic diagram of a cell site gateway determining communication device 1000 according to this application.

The communication device 1000 may be a first device (for example, a mobile management control device, a fixed network control device, or an MASG).

The communication device 1000 may include a processor 1010, and optionally, may further include a memory 1020. The memory 1020 is configured to store instructions.

In a possible manner, the processor 1010 is configured to execute the instructions stored in the memory 1020, so that the communication device 1000 implements the steps performed by the first device (for example, the mobile management control device, the fixed network control device, or the MASG) in the foregoing method.

The memory 1020 may be integrated into the processor 1010, or may be separated from the processor 1010.

Further, the communication device 1000 may further include an input interface 1030 and an output interface 1040. Further, the processor 1010, the memory 1020, the input interface 1030, and the output interface 1040 may communicate with each other through an internal connection path, to transmit a control signal and/or a data signal.

It may be considered that the processor 1010 may be implemented by using a dedicated processing chip, a processing circuit, a processing unit, or a general-purpose chip.

In another implementation, it may be considered that the communication device (for example, the first device) provided in this embodiment of this application is implemented by using a general-purpose computer. To be specific, program code for implementing functions of the processor 1010, the input interface 1030, and the output interface 1040 is stored in the memory 1020. The processor 1010 executes the code in the memory 1020 to implement the functions of the processor 1010, the input interface 1030, and the output interface 1040.

The processor 1010 is configured to: obtain, before a first moment, a location range in which a mobile device is located at the first moment; and obtain an identifier of at least one target CSG based on the location range before the first moment. The at least one target CSG can provide downlink data transmission for the mobile device at the first moment.

Optionally, the processor 1010 is configured to: determine a first location and a second moment of the mobile device, where the first location is a location at which the mobile device is located at the second moment, and the second moment is earlier than the first moment; and obtain the location range through calculation based on the first location, the second moment, a preset speed, and preset duration, where the preset speed is a moving speed of the mobile device within the preset duration, and the preset duration is between the second moment and the first moment.

Optionally, the processor 1010 is specifically configured to: determine a first location, a second moment, and a speed of the mobile device, where the first location is a location at which the mobile device is located at the second moment, the speed is a moving speed of the mobile device, and the second moment is earlier than the first moment; and obtain the location range through calculation based on the first location, the second moment, the speed, and preset duration, where the preset duration is duration between the second moment and the first moment.

Optionally, the processor 1010 is specifically configured to: determine a first location, a second moment, a first speed, a first acceleration, a second location, a third moment, a second speed, and a second acceleration of the mobile device, where the first location is a location at which the mobile device is located at the second moment, the first speed is a moving speed of the mobile device at the second moment, the first acceleration is a moving acceleration of the mobile device at the second moment, the second location is a location at which the mobile device is located at the third moment, the second speed is a moving speed of the mobile device at the third moment, the second acceleration is a moving acceleration of the mobile device at the third moment, and both the second moment and the third moment are earlier than the first moment; and use a prediction algorithm to obtain, through calculation, the location range based on the first location, the second moment, the first speed, the first acceleration, the second location, the third moment, the second speed, the second acceleration, and the preset duration, where the preset duration is duration between the second moment and the first moment or duration between the third moment and the first moment.

Optionally, the communication device 1000 is the multi-service aggregation site gateway MASG, and the processor 1010 is specifically configured to: obtain a mapping relationship from a controller; determine, based on the location range, an identifier of a radio access device covering the location range; and obtain the identifier of the at least one target CSG according to the mapping relationship and the identifier of the radio access device. The mapping relationship includes the identifier of the at least one target CSG and the identifier of the radio access device that communicates with the at least one target CSG.

Optionally, the communication device 1000 is the MASG, and the processor 1010 is configured to establish a tunnel with the at least one target CSG based on the identifier of the at least one target CSG before the first moment. The output interface 1040 is configured to send downlink data of the mobile device to the at least one target CSG through the tunnel at the first moment.

Optionally, the output interface 1040 is configured to send a correspondence used for tunnel forwarding to the at least one target CSG. The correspondence used for tunnel forwarding includes the identifier of the at least one target CSG and tunnel information, and the tunnel information is used for tunnel encapsulation.

Optionally, the communication device 1000 is a controller, and the processing unit 1010 is specifically configured to: determine, based on the location range, an identifier of a radio access device covering the location range; and obtain the identifier of the at least one target CSG according to a mapping relationship and the identifier of the radio access device. The mapping relationship includes the identifier of the at least one target CSG and the identifier of the radio access device that communicates with the at least one target CSG.

Optionally, the controller is a mobility management controller, and the output interface 1040 is configured to send the identifier of the at least one target CSG to a network controller.

Optionally, the controller is a network controller, and the input interface 1030 is further configured to obtain the mapping relationship from a mobility management controller.

Optionally, the output interface 1040 is configured to send the identifier of the at least one target CSG to the MASG before the first moment.

Optionally, the output interface 1040 sends a correspondence used for tunnel forwarding to the at least one target CSG. The correspondence used for tunnel forwarding includes the identifier of the at least one target CSG and tunnel information, and the tunnel information is used for tunnel encapsulation.

It should be understood that the processor in the embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It can be further understood that the memory in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example and not limitation, many forms of random access memories (random access memory, RAM) are available, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Functions and actions of the modules or units in the communication device 1000 enumerated above are merely examples for description. When the communication device 1000 is configured in or is the first device, the modules or units in the communication device 1000 may be configured to perform the actions or processing processes performed by the first device in the foregoing method. Herein, to avoid repetition, detailed descriptions thereof are omitted.

For concepts, explanations, detailed descriptions, and other steps of the communication device 1000 that are related to the technical solutions provided in the embodiments of this application, refer to the descriptions of the content in the foregoing methods or other embodiments. Details are not described herein again.

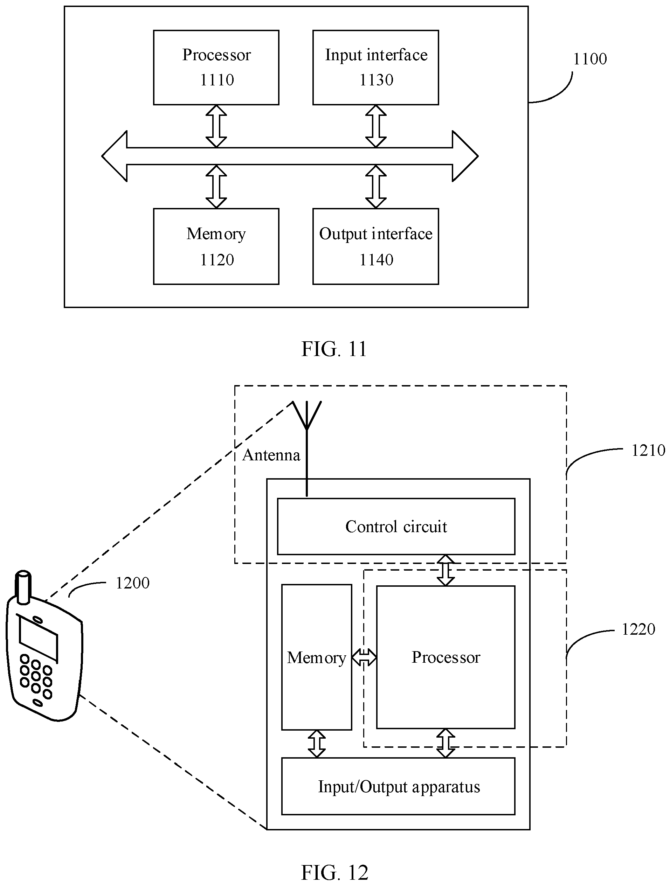

FIG. 11 is a schematic block diagram of an MASG 1100 according to an embodiment of this application.

The MASG 1100 may include a processor 1110, and optionally, may further include a memory 1120. The memory 1120 is configured to store instructions.

In a possible manner, the processor 1110 is configured to execute the instructions stored in the memory 1120, so that the MASG 1100 implements the steps performed by the MASG in the foregoing method.

The memory 1120 may be integrated into the processor 1110, or may be separated from the processor 1110.

Further, the MASG 1100 may further include an input interface 1130 and an output interface 1140. Further, the processor 1110, the memory 1120, the input interface 1130, and the output interface 1140 may communicate with each other through an internal connection path, to transmit a control signal and/or a data signal.

It may be considered that the processor 1110 may be implemented by using a dedicated processing chip, a processing circuit, a processing unit, or a general-purpose chip.

In another implementation, it may be considered that the communication device (for example, the first device) provided in this embodiment of this application is implemented by using a general-purpose computer. To be specific, program code for implementing functions of the processor 1110, the input interface 1130, and the output interface 1140 is stored in the memory 1120. The processor 1110 executes the code in the memory 1120 to implement the functions of the processor 1110, the input interface 1130, and the output interface 1140.

The input interface 1130 is configured to receive an identifier that is of at least one target cell site gateway CSG and that is sent by the first device.

The processor 1110 is configured to establish a tunnel with the at least one target CSG.

The output interface 1140 is configured to send downlink data of a mobile device to the at least one target CSG through the tunnel, and the downlink data packet is corresponding to a service requested by the mobile device.

Functions and actions of the modules or units in the MASG 1100 enumerated above are merely examples for description. The modules or units in the MASG 1100 may be configured to perform the actions or processing processes performed by the MASG in the foregoing method. Herein, to avoid repetition, detailed descriptions thereof are omitted.

For concepts, explanations, detailed descriptions, and other steps of the MASG 1100 that are related to the technical solutions provided in this embodiment of this application, refer to the descriptions of the content in the foregoing methods or other embodiments. Details are not described herein.

FIG. 12 is a schematic structural diagram of a mobile device 1200 according to this application. The apparatus 900 may be configured in the mobile device 1200, or the apparatus 900 may be the mobile device 1200. In other words, the mobile device 1200 may perform an action performed by the mobile device (for example, the mobile terminal device or the mobile relay device) in the foregoing method.

That is, a processor 1220 is configured to determine a first location at which the mobile device 1200 is located at a first moment.

A transceiver unit 1210 is configured to periodically send the first moment and the first location at which the mobile device is located the first moment to a first device. The first moment is earlier than a second moment, and the second moment is a moment at which the mobile device leaves a coverage range that is of an access device and to which the first location belongs.

Optionally, the transceiver unit 1210 is further configured to send a speed of the apparatus, the first moment, and the first location together to the first device.

Optionally, the transceiver unit 1210 is further configured to send a speed and an acceleration of the apparatus, the first moment, and the first location together to the first device.

For ease of description, FIG. 12 shows only main components of the mobile device. As shown in FIG. 12, the mobile device 1200 includes the processor, a memory, a control circuit, an antenna, and an input/output apparatus.

The processor is mainly configured to: process a communication protocol and communication data, control the entire mobile device, execute a software program, and process data of the software program, for example, is configured to support the mobile device in performing the actions described in the foregoing embodiment of the CSG determining method. The memory is mainly configured to store the software program and the data, for example, store the codebook described in the foregoing embodiments. The control circuit is mainly configured to: perform conversion between a baseband signal and a radio frequency signal, and process the radio frequency signal. The transceiver unit may include the control circuit and the antenna, and is mainly configured to receive and send a radio frequency signal in an electromagnetic wave form. The input/output apparatus, such as a touchscreen, a display, or a keyboard, is mainly configured to: receive data entered by a user and output data to the user.

After the mobile device is powered on, the processor may read the software program in a storage unit, explain and execute instructions of the software program, and process the data of the software program. When data needs to be sent in a wireless manner, after performing baseband processing on the to-be-sent data, the processor outputs a baseband signal to a radio frequency circuit. After performing radio frequency processing on the baseband signal, the radio frequency circuit sends a radio frequency signal in a form of an electromagnetic wave through the antenna. When data is sent to the mobile device, the radio frequency circuit receives a radio frequency signal by using the antenna, converts the radio frequency signal into a baseband signal, and outputs the baseband signal to the processor. The processor converts the baseband signal into data, and processes the data.

A person skilled in the art may understand that, for ease of description, FIG. 12 shows only one memory and one processor. An actual mobile device may include a plurality of processors and a plurality of memories. The memory may also be referred to as a storage medium, a storage device, or the like. This is not limited in this embodiment of this application.

For example, the processor may include a baseband processor and a central processing unit. The baseband processor is mainly configured to process the communication protocol and the communication data. The central processing unit is mainly configured to: control the entire mobile device, execute the software program, and process the data of the software program. The processor in FIG. 12 integrates functions of the baseband processor and the central processing unit. A person skilled in the art may understand that the baseband processor and the central processing unit may be individually independent processors, and are interconnected by using a technology such as a bus. A person skilled in the art may understand that the mobile device may include a plurality of baseband processors to adapt to different network standards, the mobile device may include a plurality of central processing units to improve a processing capability of the mobile device, and the components of the mobile device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program. The processor executes the software program to implement a baseband processing function.

For example, in this embodiment of this application, the antenna that has receiving and sending functions and the control circuit may be considered as the transceiver unit 1210 of the mobile device 1200, and the processor having a processing function may be considered as the processor 1220 of the mobile device 1200. As shown in FIG. 12, the mobile device 1200 includes the transceiver unit 1210 and the processor 1220. Optionally, hardware (for example, an input interface) that is in the transceiver unit 1210 and that is configured to implement a receiving function may be considered as a receiving unit, and hardware (for example, an output interface) that is in the transceiver unit 1210 and that is configured to implement a sending function may be considered as a sending unit. In other words, the transceiver unit includes the receiving unit and the sending unit.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in the embodiments.

In addition, functional units in the embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or partially contribute to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A cell site gateway, CSG, determining method, comprising:
obtaining, by a multi-service aggregation site gateway, MASG (101) before a first moment, a location range in which a mobile device (141, 142) is located at the first moment; and
obtaining, by the MASG (101), an identifier of at least one target CSG (122) based on the location range before the first moment;
establishing, by the MASG (101) before the first moment, a tunnel,
based on the identifier of the at least one target CSG (122), with the at least one target CSG (122); and
sending, by the MASG (101), downlink data of the mobile device (141, 142) to the at least one target CSG (122) through the tunnel at the first moment,
wherein the at least one target CSG (122)
is capable of providing downlink data transmission for the mobile device (141, 142) at the first moment.

2. The method according to claim 1, wherein the obtaining, by an MASG (101) before a first moment, a location range in which a mobile device (141, 142) is located at the first moment comprises:
determining, by the MASG (101), a first location and a second moment of the mobile device (141, 142), wherein the first location is a location at which the mobile device (141, 142) is located at the second moment, and the second moment is earlier than the first moment; and
obtaining, by the MASG (101), the location range through calculation based on the first location, the second moment, a preset speed, and preset duration, wherein the preset speed is a moving speed of the mobile device (141, 142) within the preset duration, and the preset duration is duration between the second moment and the first moment.

3. The method according to claim 1, wherein the obtaining, by an MASG (101, 150, 160) before a first moment, a location range in which a mobile device (141, 142) is located at the first moment comprises:
determining, by the MASG (101), a first location, a second moment, and a speed of the mobile device (141, 142), wherein the first location is a location at which the mobile device (141, 142) is located at the second moment, the speed is a moving speed of the mobile device (141, 142), and the second moment is earlier than the first moment; and
obtaining, by the MASG (101), the location range through calculation based on the first location, the second moment, the speed, and preset duration, wherein the preset duration is duration between the second moment and the first moment.

4. The method according to claim 1, wherein the obtaining, by an MASG (101) before a first moment, a location range in which a mobile device (141, 142) is located at the first moment comprises:
determining, by the MASG (101), a first location, a second moment, a first speed, a first acceleration, a second location, a third moment, a second speed, and a second acceleration of the mobile device (141, 142), wherein the first location is a location at which the mobile device (141, 142) is located at the second moment, the first speed is a moving speed of the mobile device (141, 142) at the second moment, the first acceleration is a moving acceleration of the mobile device (141, 142) at the second moment, the second location is a location at which the mobile device (141, 142) is located at the third moment, the second speed is a moving speed of the mobile device (141, 142) at the third moment, the second acceleration is a moving acceleration of the mobile device (141, 142) at the third moment, and both the second moment and the third moment are earlier than the first moment; and
using, by the MASG (101), a prediction algorithm to obtain, through calculation, the location range based on the first location, the second moment, the first speed, the first acceleration, the second location, the third moment, the second speed, the second acceleration, and the preset duration, wherein the preset duration is duration between the second moment and the first moment or duration between the third moment and the first moment.

5. The method according to any one of claims 1 to 4, wherein the obtaining, by the MASG (101), an identifier of at least one target CSG based on the location range before the first moment comprises:
obtaining, by the MASG (101, 150, 160), a mapping relationship from a controller;
determining, by the MASG (101, 150, 160) based on the location range, an identifier of a radio access device covering the location range; and
obtaining, by the MASG (101, 150, 160), the identifier of the at least one target CSG according to the mapping relationship and the identifier of the radio access device, wherein the mapping relationship comprises the identifier of the at least one target CSG and the identifier of the radio access device that communicates with the at least one target CSG.

6. The method according to any one of claims 1 to 5, wherein the establishing, by the MASG (101) before the first moment, a tunnel based on the identifier of the at least one target CSG and the at least one target CSG comprises:
sending, by the MASG (101), a correspondence used for tunnel forwarding to the at least one target CSG, wherein the correspondence used for tunnel forwarding comprises the identifier of the at least one target CSG and tunnel information, and the tunnel information is used for tunnel encapsulation.

7. A cell site gateway, CSG, determining apparatus (700), comprising:
an obtaining unit (710), configured to obtain, before a first moment, a location range in which a mobile device (141, 142) is located at the first moment; and
a processing unit (720), configured to obtain an identifier of at least one target CSG (122) based on the location range before the first moment;
**characterized in that** the apparatus (700) is configured in an MASG (101) or the apparatus is an MASG (101), and the apparatus (700) further comprises:
a tunnel establishment unit (730), configured to establish, before the first moment, a tunnel,
based on the identifier of the at least one target CSG (122), with the at least one target CSG (122); and
a data sending unit (740), configured to send downlink data of the mobile device (141, 142) to the at least one target CSG (122) through the tunnel at the first moment,
wherein the at least one target CSG (122) is capable of providing downlink data transmission for the mobile device (141, 142) at the first moment.

8. The apparatus according to claim 7, wherein the obtaining unit (710) is specifically configured to:
determine a first location and a second moment of the mobile device (141, 142), wherein the first location is a location at which the mobile device (141, 142) is located at the second moment, and the second moment is earlier than the first moment; and
obtain the location range through calculation based on the first location, the second moment, a preset speed, and preset duration, wherein the preset speed is a moving speed of the mobile device (141, 142) within the preset duration, and the preset duration is duration between the second moment and the first moment.

9. The apparatus according to claim 9, wherein the obtaining unit (710) is specifically configured to:
determine a first location, a second moment, and a speed of the mobile device (141, 142), wherein the first location is a location at which the mobile device (141, 142) is located at the second moment, the speed is a moving speed of the mobile device (141, 142), and the second moment is earlier than the first moment; and
obtain the location range through calculation based on the first location, the second moment, the speed, and preset duration, wherein the preset duration is duration between the second moment and the first moment.

10. The apparatus according to claim 9, wherein the obtaining unit (710) is specifically configured to:
determine a first location, a second moment, a first speed, a first acceleration, a second location, a third moment, a second speed, and a second acceleration of the mobile device (141, 142), wherein the first location is a location at which the mobile device (141, 142) is located at the second moment, the first speed is a moving speed of the mobile device (141, 142) at the second moment, the first acceleration is a moving acceleration of the mobile device at the second moment, the second location is a location at which the mobile device (141, 142) is located at the third moment, the second speed is a moving speed of the mobile device (141, 142) at the third moment, the second acceleration is a moving acceleration of the mobile device (141, 142) at the third moment, and both the second moment and the third moment are earlier than the first moment; and
use a prediction algorithm to obtain, through calculation, the location range based on the first location, the second moment, the first speed, the first acceleration, the second location, the third moment, the second speed, the second acceleration, and the preset duration, wherein the preset duration is duration between the second moment and the first moment or duration between the third moment and the first moment.

11. The apparatus according to any one of claims 7 to 10, wherein the processing unit (720) is specifically configured to:
obtain a mapping relationship from a controller (150);
determine, based on the location range, an identifier of a radio access device covering the location range; and
obtain the identifier of the at least one target CSG according to the mapping relationship and the identifier of the radio access device, wherein the mapping relationship comprises the identifier of the at least one target CSG and the identifier of the radio access device that communicates with the at least one target CSG.

12. The apparatus according to any one of claims 7 to 11, wherein the tunnel establishment unit (730) is specifically configured to:
send a correspondence used for tunnel forwarding to the at least one target CSG, wherein the correspondence used for tunnel forwarding comprises the identifier of the at least one target CSG and tunnel information, and the tunnel information is used for tunnel encapsulation.

13. A system, comprising:
a cell site gateway, CSG, determining apparatus (700) according to any one of claims 7 to 12; a target cell site gateway, target CSG (122); and
a mobile device (141, 142).

## Patentansprüche

1. Cell-Site-Gateway-Bestimmungsverfahren, CSG-Bestimmungsverfahren, umfassend:
Erlangen, durch ein Multi-Service-Aggregation-Site-Gateway, MASG, (101) vor einem ersten Zeitpunkt, eines Standortbereichs, in dem sich ein mobiles Gerät (141, 142) zum ersten Zeitpunkt befindet; und
Erlangen, durch das MASG (101), einer Kennung von mindestens einem Ziel-CSG (122) basierend auf dem Standortbereich vor dem ersten Zeitpunkt;
Einrichten, durch das MASG (101) vor dem ersten Zeitpunkt, eines Tunnels, basierend auf der Kennung des mindestens einen Ziel-CSG (122), mit dem mindestens einen Ziel-CSG (122); und
Senden, durch das MASG (101), von Downlink-Daten des mobilen Geräts (141, 142) an das mindestens eine Ziel-CSG (122) durch den Tunnel zum ersten Zeitpunkt, wobei das mindestens eine Ziel-CSG (122) in der Lage ist, eine Downlink-Datenübertragung für das mobile Gerät (141, 142) zum ersten Zeitpunkt bereitzustellen.

2. Verfahren nach Anspruch 1, wobei das Erlangen, durch ein MASG (101) vor einem ersten Zeitpunkt, eines Standortbereichs, in dem sich ein mobiles Gerät (141, 142) zum ersten Zeitpunkt befindet, Folgendes umfasst:
Bestimmen, durch das MASG (101), eines ersten Standorts und eines zweiten Zeitpunkts des mobilen Geräts (141, 142), wobei der erste Standort ein Standort ist, an dem sich das mobile Gerät (141, 142) zum zweiten Zeitpunkt befindet, und der zweite Zeitpunkt früher ist als der erste Zeitpunkt; und
Erlangen, durch das MASG (101), des Standortbereichs durch Berechnung basierend auf dem ersten Standort, dem zweiten Zeitpunkt, einer voreingestellten Geschwindigkeit und einer voreingestellten Dauer, wobei die voreingestellte Geschwindigkeit eine Bewegungsgeschwindigkeit des mobilen Geräts (141, 142) innerhalb der voreingestellten Dauer ist und die voreingestellte Dauer die Dauer zwischen dem zweiten Zeitpunkt und dem ersten Zeitpunkt ist.

3. Verfahren nach Anspruch 1, wobei das Erlangen, durch ein MASG (101, 150, 160) vor einem ersten Zeitpunkt, eines Standortbereichs, in dem sich ein mobiles Gerät (141, 142) zum ersten Zeitpunkt befindet, Folgendes umfasst:
Bestimmen, durch das MASG (101), eines ersten Standorts, eines zweiten Zeitpunkts und einer Geschwindigkeit des mobilen Geräts (141, 142), wobei der erste Standort ein Standort ist, an dem sich das mobile Gerät (141, 142) zum zweiten Zeitpunkt befindet, die Geschwindigkeit eine Bewegungsgeschwindigkeit des mobilen Geräts (141, 142) ist und der zweite Zeitpunkt früher ist als der erste Zeitpunkt; und
Erlangen, durch das MASG (101), des Standortbereichs durch Berechnung basierend auf dem ersten Standort, dem zweiten Zeitpunkt, der Geschwindigkeit und der voreingestellten Dauer, wobei die voreingestellte Dauer die Dauer zwischen dem zweiten Zeitpunkt und dem ersten Zeitpunkt ist.

4. Verfahren nach Anspruch 1, wobei das Erlangen, durch ein MASG (101) vor einem ersten Zeitpunkt, eines Standortbereichs, in dem sich ein mobiles Gerät (141, 142) zum ersten Zeitpunkt befindet, Folgendes umfasst:
Bestimmen, durch das MASG (101), eines ersten Standorts, eines zweiten Zeitpunkts, einer ersten Geschwindigkeit, einer ersten Beschleunigung, eines zweiten Standorts, eines dritten Zeitpunkts, einer zweiten Geschwindigkeit und einer zweiten Beschleunigung des mobilen Geräts (141, 142), wobei der erste Standort ein Standort ist, an dem sich das mobile Gerät (141, 142) zum zweiten Zeitpunkt befindet, die erste Geschwindigkeit eine Bewegungsgeschwindigkeit des mobilen Geräts (141, 142) zum zweiten Zeitpunkt ist, die erste Beschleunigung eine Bewegungsbeschleunigung des mobilen Geräts (141, 142) zum zweiten Zeitpunkt ist, der zweite Standort ein Standort ist, an dem sich das mobile Gerät (141, 142) zum dritten Zeitpunkt befindet, die zweite Geschwindigkeit eine Bewegungsgeschwindigkeit des mobilen Geräts (141, 142) zum dritten Zeitpunkt ist, die zweite Beschleunigung eine Bewegungsbeschleunigung des mobilen Geräts (141, 142) zum dritten Zeitpunkt ist und sowohl der zweite Zeitpunkt als auch der dritte Zeitpunkt früher sind als der erste Zeitpunkt; und
Verwenden, durch das MASG (101), eines Vorhersagealgorithmus, um durch Berechnung den Standortbereich basierend auf dem ersten Standort, dem zweiten Zeitpunkt, der ersten Geschwindigkeit, der ersten Beschleunigung, dem zweiten Standort, dem dritten Zeitpunkt, der zweiten Geschwindigkeit, der zweiten Beschleunigung und der voreingestellten Dauer zu erlangen, wobei die voreingestellte Dauer die Dauer zwischen dem zweiten Zeitpunkt und dem ersten Zeitpunkt oder die Dauer zwischen dem dritten Zeitpunkt und dem ersten Zeitpunkt ist.

5. Verfahren nach einem der Ansprüche 1 bis 4, wobei das Erlangen, durch das MASG (101), einer Kennung mindestens eines Ziel-CSG basierend auf dem Standortbereich vor dem ersten Zeitpunkt Folgendes umfasst:
Erlangen, durch das MASG (101, 150, 160), einer Zuordnungsbeziehung von einer Steuerung;
Bestimmen, durch das MASG (101, 150, 160) basierend auf dem Standortbereich, einer Kennung einer Funkzugangsvorrichtung, die den Standortbereich abdeckt; und
Erlangen, durch das MASG (101, 150, 160), der Kennung des mindestens einen Ziel-CSG gemäß der Zuordnungsbeziehung und der Kennung der Funkzugangsvorrichtung, wobei die Zuordnungsbeziehung die Kennung des mindestens einen Ziel-CSG und die Kennung der Funkzugangsvorrichtung, die mit dem mindestens einen Ziel-CSG kommuniziert, umfasst.

6. Verfahren nach einem der Ansprüche 1 bis 5, wobei das Einrichten, durch das MASG (101) vor dem ersten Zeitpunkt, eines Tunnels basierend auf der Kennung des mindestens einen Ziel-CSG und dem mindestens einen Ziel-CSG Folgendes umfasst:
Senden, durch das MASG (101), einer Korrespondenz, die für die Tunnelweiterleitung an das mindestens eine Ziel-CSG verwendet wird, wobei die für die Tunnelweiterleitung verwendete Korrespondenz die Kennung des mindestens einen Ziel-CSG und Tunnelinformationen umfasst und die Tunnelinformationen zur Tunnelkapselung verwendet werden.

7. Cell-Site-Gateway-Bestimmungsvorrichtung, CSG-Bestimmungsvorrichtung, (700), umfassend:
eine Erlangungseinheit (710), die dazu konfiguriert ist, vor einem ersten Zeitpunkt einen Standortbereich zu erlangen, in dem sich ein mobiles Gerät (141, 142) zum ersten Zeitpunkt befindet; und
eine Verarbeitungseinheit (720), die dazu konfiguriert ist, eine Kennung von mindestens einem Ziel-CSG (122) basierend auf dem Standortbereich vor dem ersten Zeitpunkt zu erlangen;
**dadurch gekennzeichnet, dass** die Vorrichtung (700) in einem MASG (101) konfiguriert ist oder die Vorrichtung ein MASG (101) ist, und die Vorrichtung (700) ferner Folgendes umfasst:
eine Tunneleinrichtungseinheit (730), die dazu konfiguriert ist, vor dem ersten Zeitpunkt einen Tunnel, basierend auf der Kennung des mindestens einen Ziel-CSG (122), mit dem mindestens einen Ziel-CSG (122) einzurichten; und
eine Datensendeeinheit (740), die dazu konfiguriert ist, Downlink-Daten des mobilen Geräts (141, 142) an das mindestens eine Ziel-CSG (122) durch den Tunnel zum ersten Zeitpunkt zu senden, wobei das mindestens eine Ziel-CSG (122) in der Lage ist, eine Downlink-Datenübertragung für das mobile Gerät (141, 142) zum ersten Zeitpunkt bereitzustellen.

8. Vorrichtung nach Anspruch 7, wobei die Erlangungseinheit (710) speziell zu Folgendem konfiguriert ist:
Bestimmen eines ersten Standorts und eines zweiten Zeitpunkts des mobilen Geräts (141, 142), wobei der erste Standort ein Standort ist, an dem sich das mobile Gerät (141, 142) zum zweiten Zeitpunkt befindet, und der zweite Zeitpunkt früher ist als der erste Zeitpunkt; und
Erlangen des Standortbereichs durch Berechnung basierend auf dem ersten Standort, dem zweiten Zeitpunkt, einer voreingestellten Geschwindigkeit und einer voreingestellten Dauer, wobei die voreingestellte Geschwindigkeit eine Bewegungsgeschwindigkeit des mobilen Geräts (141, 142) innerhalb der voreingestellten Dauer ist, und die voreingestellte Dauer die Dauer zwischen dem zweiten Zeitpunkt und dem ersten Zeitpunkt ist.

9. Vorrichtung nach Anspruch 9, wobei die Erlangungseinheit (710) speziell zu Folgendem konfiguriert ist:
Bestimmen eines ersten Standorts, eines zweiten Zeitpunkts und einer Geschwindigkeit des mobilen Geräts (141, 142), wobei der erste Standort ein Standort ist, an dem sich das mobile Gerät (141, 142) zum zweiten Zeitpunkt befindet, die Geschwindigkeit eine Bewegungsgeschwindigkeit des mobilen Geräts (141, 142) ist und der zweite Zeitpunkt früher ist als der erste Zeitpunkt; und
Erlangen des Standortbereichs durch Berechnung basierend auf dem ersten Standort, dem zweiten Zeitpunkt, der Geschwindigkeit und der voreingestellten Dauer, wobei die voreingestellte Dauer die Dauer zwischen dem zweiten Zeitpunkt und dem ersten Zeitpunkt ist.

10. Vorrichtung nach Anspruch 9, wobei die Erlangungseinheit (710) speziell zu Folgendem konfiguriert ist:
Bestimmen eines ersten Standorts, eines zweiten Zeitpunkts, einer ersten Geschwindigkeit, einer ersten Beschleunigung, eines zweiten Standorts, eines dritten Zeitpunkts, einer zweiten Geschwindigkeit und einer zweiten Beschleunigung des mobilen Geräts (141, 142), wobei der erste Standort ein Standort ist,
an dem sich das mobile Gerät (141, 142) zum zweiten Zeitpunkt befindet, die erste Geschwindigkeit eine Bewegungsgeschwindigkeit des mobilen Geräts (141, 142) zum zweiten Zeitpunkt ist, die erste Beschleunigung eine Bewegungsbeschleunigung des mobilen Geräts zum zweiten Zeitpunkt ist, der zweite Standort ein Standort ist, an dem sich das mobile Gerät (141, 142) zum dritten Zeitpunkt befindet, die zweite Geschwindigkeit eine Bewegungsgeschwindigkeit des mobilen Geräts (141, 142) zum dritten Zeitpunkt ist, die zweite Beschleunigung eine Bewegungsbeschleunigung des mobilen Geräts (141, 142) zum dritten Zeitpunkt ist und sowohl der zweite Zeitpunkt als auch der dritte Zeitpunkt früher sind als der erste Zeitpunkt; und
Verwenden eines Vorhersagealgorithmus, um durch Berechnung den Standortbereich basierend auf dem ersten Standort, dem zweiten Zeitpunkt, der ersten Geschwindigkeit, der ersten Beschleunigung, dem zweiten Standort, dem dritten Zeitpunkt, der zweiten Geschwindigkeit, der zweiten Beschleunigung und der voreingestellten Dauer zu erlangen, wobei die voreingestellte Dauer die Dauer zwischen dem zweiten Zeitpunkt und dem ersten Zeitpunkt oder die Dauer zwischen dem dritten Zeitpunkt und dem ersten Zeitpunkt ist.

11. Vorrichtung nach einem der Ansprüche 7 bis 10, wobei die Verarbeitungseinheit (720) speziell zu Folgendem konfiguriert ist:
Erlangen einer Zuordnungsbeziehung von einer Steuerung (150);
Bestimmen, basierend auf dem Standortbereich, einer Kennung einer Funkzugangsvorrichtung, die den Standortbereich abdeckt; und
Erlangen der Kennung des mindestens einen Ziel-CSG gemäß der Zuordnungsbeziehung und der Kennung der Funkzugangsvorrichtung, wobei die Zuordnungsbeziehung die Kennung des mindestens einen Ziel-CSG und die Kennung der Funkzugangsvorrichtung, die mit dem mindestens einen Ziel-CSG kommuniziert, umfasst.

12. Vorrichtung nach einem der Ansprüche 7 bis 11, wobei die Tunneleinrichtungseinheit (730) speziell zu Folgendem konfiguriert ist:
Senden einer Korrespondenz, die für die Tunnelweiterleitung an das mindestens eine Ziel-CSG verwendet wird, wobei die für die Tunnelweiterleitung verwendete Korrespondenz die Kennung des mindestens einen Ziel-CSG und Tunnelinformationen umfasst und die Tunnelinformationen zur Tunnelkapselung verwendet werden.

13. System, umfassend:
eine Cell-Site-Gateway-Bestimmungsvorrichtung, CSG-Bestimmungsvorrichtung, (700) nach einem der Ansprüche 7 bis 12;
ein Ziel-Cell-Site-Gateway, Ziel-CSG, (122); und
ein mobiles Gerät (141, 142).

## Revendications

1. Procédé permettant de déterminer une passerelle de site cellulaire, CSG, comprenant :
l'obtention, par une passerelle de site d'agrégation multiservices, MASG (101) avant un premier instant, d'une plage de localisation dans laquelle un dispositif mobile (141, 142) se trouve au premier instant ; et
l'obtention, par la MASG (101), d'un identifiant d'au moins une CSG cible (122) sur la base de la plage de localisation avant le premier instant ;
l'établissement, par la MASG (101) avant le premier instant, d'un tunnel, sur la base de l'identifiant de l'au moins une CSG cible (122), avec l'au moins une CSG cible (122) ; et
l'envoi, par la MASG (101), de données de liaison descendante du dispositif mobile (141, 142) à l'au moins une CSG cible (122) par le biais du tunnel au premier instant, dans lequel l'au moins une CSG cible (122) est capable de fournir une transmission de données de liaison descendante pour le dispositif mobile (141, 142) au premier instant.

2. Procédé selon la revendication 1, dans lequel l'obtention, par une MASG (101) avant un premier instant, d'une plage de localisation dans laquelle se trouve un appareil mobile (141, 142) au premier instant comprend :
la détermination, par la MASG (101), d'un premier emplacement et d'un deuxième instant du dispositif mobile (141, 142), dans lequel le premier emplacement est un emplacement auquel le dispositif mobile (141, 142) se trouve au deuxième instant, et le deuxième instant est antérieur au premier instant ; et
l'obtention, par la MASG (101), de la plage de localisation par calcul basé sur le premier emplacement, le deuxième instant, une vitesse prédéfinie et une durée prédéfinie, dans lequel la vitesse prédéfinie est une vitesse de déplacement du dispositif mobile (141, 142) dans la durée prédéfinie, et la durée prédéfinie est une durée entre le deuxième instant et le premier instant.

3. Procédé selon la revendication 1, dans lequel l'obtention, par une MASG (101, 150, 160) avant un premier instant, d'une plage de localisation dans laquelle se trouve un dispositif mobile (141, 142) au premier instant comprend :
la détermination, par la MASG (101), d'un premier emplacement, d'un deuxième instant et d'une vitesse du dispositif mobile (141, 142), dans lequel le premier emplacement est un emplacement auquel le dispositif mobile (141, 142) se trouve au deuxième instant, la vitesse est une vitesse de déplacement du dispositif mobile (141, 142) et le deuxième instant est antérieur au premier instant ; et
l'obtention, par la MASG (101), de la plage de localisation par calcul basé sur le premier emplacement, le deuxième instant, la vitesse et la durée prédéfinie, dans lequel la durée prédéfinie est une durée entre le deuxième instant et le premier instant.

4. Procédé selon la revendication 1, dans lequel l'obtention, par une MASG (101) avant un premier instant, d'une plage de localisation dans laquelle se trouve un dispositif mobile (141, 142) au premier instant comprend :
la détermination, par la MASG (101), d'un premier emplacement, d'un deuxième instant, d'une première vitesse, d'une première accélération, d'un second emplacement, d'un troisième instant, d'une seconde vitesse et d'une seconde accélération du dispositif mobile (141, 142), dans lequel le premier emplacement est un emplacement auquel se trouve le dispositif mobile (141, 142) au deuxième instant, la première vitesse est une vitesse de déplacement du dispositif mobile (141, 142) au deuxième instant, la première accélération est une accélération de déplacement du dispositif mobile (141, 142) au deuxième instant, le second emplacement est un emplacement auquel se trouve le dispositif mobile (141, 142) au troisième instant, la seconde vitesse est une vitesse de déplacement du dispositif mobile (141, 142) au troisième instant, la seconde accélération est une accélération de déplacement du dispositif mobile (141, 142) au troisième instant, et le deuxième instant et le troisième instant sont tous deux antérieurs au premier instant ; et
l'utilisation, par la MASG (101), d'un algorithme de prédiction pour obtenir, par calcul, la plage de localisation sur la base du premier emplacement, du deuxième instant, de la première vitesse, de la première accélération, du second emplacement, du troisième instant, de la seconde vitesse, de la seconde accélération et de la durée prédéfinie, dans lequel la durée prédéfinie est une durée entre le deuxième instant et le premier instant ou une durée entre le troisième instant et le premier instant.

5. Procédé selon l'une quelconque des revendications 1 à 4, dans lequel l'obtention, par la MASG (101), d'un identifiant d'au moins une CSG cible sur la base de la plage de localisation avant le premier instant comprend :
l'obtention, par la MASG (101, 150, 160), d'une relation de mappage auprès d'un dispositif de commande ;
la détermination, par la MASG (101, 150, 160) sur la base de la plage de localisation, d'un identifiant d'un dispositif d'accès radio couvrant la plage de localisation ; et
l'obtention, par la MASG (101, 150, 160), de l'identifiant de l'au moins une CSG cible selon la relation de mappage et l'identifiant du dispositif d'accès radio, dans lequel la relation de mappage comprend l'identifiant de l'au moins une CSG cible et l'identifiant du dispositif d'accès radio qui communique avec l'au moins une CSG cible.

6. Procédé selon l'une quelconque des revendications 1 à 5, dans lequel l'établissement, par la MASG (101) avant le premier instant, d'un tunnel basé sur l'identifiant de l'au moins une CSG cible et de l'au moins une CSG cible comprend :
l'envoi, par la MASG (101), d'une correspondance utilisée pour le transfert de tunnel vers l'au moins une CSG cible, dans lequel la correspondance utilisée pour le transfert de tunnel comprend l'identifiant de l'au moins une CSG cible et des informations de tunnel, et les informations de tunnel sont utilisées pour l'encapsulation du tunnel.

7. Appareil permettant de déterminer une passerelle de site cellulaire, CSG (700), comprenant :
une unité d'obtention (710), configurée pour obtenir, avant un premier instant, une plage de localisation dans laquelle un dispositif mobile (141, 142) se trouve au premier instant ; et
une unité de traitement (720), configurée pour obtenir un identifiant d'au moins une CSG cible (122) sur la base de la plage de localisation avant le premier instant ;
**caractérisé en ce que** l'appareil (700) est configuré dans une MASG (101) ou l'appareil est une MASG (101), et l'appareil (700) comprend en outre :
une unité d'établissement de tunnel (730), configurée pour établir, avant le premier instant, un tunnel, sur la base de l'identifiant de l'au moins une CSG cible (122), avec l'au moins une CSG cible (122) ; et
une unité d'envoi de données (740), configurée pour envoyer des données de liaison descendante du dispositif mobile (141, 142) à l'au moins une CSG cible (122) par le biais du tunnel au premier instant, dans lequel l'au moins une CSG cible (122) est capable de fournir une transmission de données de liaison descendante pour le dispositif mobile (141, 142) au premier instant.

8. Appareil selon la revendication 7, dans lequel l'unité d'obtention (710) est spécifiquement configurée pour :
déterminer un premier emplacement et un deuxième instant du dispositif mobile (141, 142), dans lequel le premier emplacement est un emplacement auquel le dispositif mobile (141, 142) se trouve au deuxième instant, et le deuxième instant est antérieur au premier instant ; et
obtenir la plage de localisation par calcul basé sur le premier emplacement, le deuxième instant, une vitesse prédéfinie et une durée prédéfinie, dans lequel la vitesse prédéfinie est une vitesse de déplacement du dispositif mobile (141, 142) dans la durée prédéfinie, et la durée prédéfinie est une durée entre le deuxième instant et le premier instant.

9. Appareil selon la revendication 9, dans lequel l'unité d'obtention (710) est configurée spécifiquement pour :
déterminer un premier emplacement, un deuxième instant et une vitesse du dispositif mobile (141, 142), dans lequel le premier emplacement est un emplacement auquel le dispositif mobile (141, 142) se trouve au deuxième instant, la vitesse est une vitesse de déplacement du dispositif mobile (141, 142) et le deuxième instant est antérieur au premier instant ; et
obtenir la plage de localisation par calcul basé sur le premier emplacement, le deuxième instant, la vitesse et la durée prédéfinie, dans lequel la durée prédéfinie est une durée entre le deuxième instant et le premier instant.

10. Appareil selon la revendication 9, dans lequel l'unité d'obtention (710) est spécifiquement configurée pour :
déterminer un premier emplacement, un deuxième instant, une première vitesse, une première accélération, un second emplacement, un troisième instant, une seconde vitesse et une seconde accélération du dispositif mobile (141, 142), dans lequel le premier emplacement est un emplacement auquel se trouve le dispositif mobile (141, 142) au deuxième instant, la première vitesse est une vitesse de déplacement du dispositif mobile (141, 142) au deuxième instant, la première accélération est une accélération de déplacement du dispositif mobile au deuxième instant, le second emplacement est un emplacement auquel se trouve le dispositif mobile (141, 142) au troisième instant, la seconde vitesse est une vitesse de déplacement du dispositif mobile (141, 142) au troisième instant, la seconde accélération est une accélération de déplacement du dispositif mobile (141, 142) au troisième instant, et le deuxième instant et le troisième instant sont tous deux antérieurs au premier instant ; et
utiliser un algorithme de prédiction pour obtenir, par calcul, la plage de localisation sur la base du premier emplacement, du deuxième instant, de la première vitesse, de la première accélération, du second emplacement, du troisième instant, de la seconde vitesse, de la seconde accélération et de la durée prédéfinie, dans lequel la durée prédéfinie est une durée entre le deuxième instant et le premier instant ou une durée entre le troisième instant et le premier instant.

11. Appareil selon l'une quelconque des revendications 7 à 10, dans lequel l'unité de traitement (720) est spécifiquement configurée pour :
obtenir une relation de mappage à partir d'un dispositif de commande (150) ;
déterminer sur la base de la plage de localisation, un identifiant d'un dispositif d'accès radio couvrant la plage de localisation ; et
obtenir l'identifiant de l'au moins une CSG cible selon la relation de mappage et l'identifiant du dispositif d'accès radio, dans lequel la relation de mappage comprend l'identifiant de l'au moins une CSG cible et l'identifiant du dispositif d'accès radio qui communique avec l'au moins une CSG cible.

12. Appareil selon l'une quelconque des revendications 7 à 11, dans lequel l'unité d'établissement de tunnel (730) est spécifiquement configurée pour :
envoyer une correspondance utilisée pour le transfert de tunnel vers l'au moins une CSG cible, dans lequel la correspondance utilisée pour le transfert de tunnel comprend l'identifiant de l'au moins une CSG cible et des informations de tunnel, et les informations de tunnel sont utilisées pour l'encapsulation du tunnel.

13. Système, comprenant :
un appareil permettant de déterminer une passerelle de site cellulaire, CSG (700) selon l'une quelconque des revendications 7 à 12 ; une passerelle de site cellulaire cible, CSG (122) cible ; et
un dispositif mobile (141, 142).
